# EUROPEAN PATENT APPLICATION

(11) **EP 4 752 276 A1**
(43) Date of publication of application: **03.06.2026**
(21) Application number: 25218996.4
(22) Date of filing: 27.11.2025
(51) Int. Cl.: D21H 11/18, B32B 29/00, D21H 17/63, D21H 17/67, D21H 27/10, D21H 27/30

(54) **A LAMINATED PACKAGING MATERIAL AND A METHOD FOR PRODUCING A MATERIAL FOR A LAMINATED PACKAGING MATERIAL**

(30) Priority: 28.11.2024 EP 24216204
(71) Applicant: Tetra Laval Holdings & Finance S.A., 1009 Pully (CH)
(72) Inventor: WAHLBERG, Jan, 221 86 Lund (SE); BERLIN, Mikael, 221 86 Lund (SE)
(74) Representative: Tetra Pak Patent Attorneys

(57) **Abstract**

The present disclosure relates to a method for producing a material for a laminated packaging material, the method comprising the steps of (A1) providing a liquid dispersion comprising cellulosic material; (A2) providing a liquid dispersion comprising at least one carbon-based material chosen from the group consisting of graphite, graphene, graphene oxide and reduced graphene oxide; (B1) mixing the dispersion provided in step A1 with the dispersion provided in step A2 to obtain a mixture; (C1) subjecting the mixture obtained step (B1) to draining of liquid through a porous substrate, followed by an initial compression to obtain a compressed cellulosic material; (D1) subjecting the compressed cellulosic material obtained in step (C1) to pressing to obtain a pressed cellulosic material; and, optionally, a step of (E1) heating the cellulosic material before, during and/or after step (D1); to obtain a cellulose-based sheet material for a laminated packaging material. The present disclosure also relates to a laminated packaging material and to the heat sealing of packages formed from the laminated packaging material, as well as a packaging container for food products and to the use of the laminated packaging material forming a packaging container.

## Description

### Technical field

The present disclosure relates to a method for producing a material for a laminated packaging material, a laminated packaging material comprising the produced material. The present disclosure also relates to the heat sealing of packages formed from the laminated packaging material as well as a packaging container for food products comprising the laminated packaging material and further to the use of the laminated packaging material for forming a packaging container.

### Background of the invention

Packaging containers of the single use disposable type for liquid foods are often produced from a packaging laminate based on paperboard or carton. One such commonly occurring packaging container is marketed under the trademark Tetra Brik Aseptic^{®} and is principally employed for aseptic packaging of liquid foods such as milk, fruit juices etc., and sold for long term ambient storage. The laminated packaging material in this known packaging container is typically a laminate comprising a bulk, or core layer, of paper, paperboard or other cellulose-based material, and outer, liquid-tight layers of thermoplastics. In order to render the packaging container gas-tight, in particular oxygen gas-tight, for example for the purpose of aseptic packaging and packaging of milk or fruit juice, the laminate in these packaging containers normally comprises at least one additional layer, most commonly an aluminium foil.

On the inside of the laminate, i.e. the side intended to face the filled food contents of a container produced from the laminate, there is an innermost layer, applied onto the aluminium foil, which innermost, inside layer may be composed of one or several part layers, comprising heat sealable thermoplastic polymers, such as adhesive polymers and/or polyolefins. Also on the outside of the bulk layer, there is an outermost heat sealable polymer layer.

The packaging containers are generally produced by means of high-speed packaging machines of the type that form, fill and seal packages from a web or from prefabricated blanks of laminated packaging material. Packaging containers may thus be produced by reforming a web of the laminated packaging material into a tube by both of the longitudinal edges of the web being united to each other in an overlap joint by welding together the inner- and outermost heat sealable thermoplastic polymer layers. The tube is filled with the intended liquid food product and is thereafter divided into individual packages by repeated transversal seals of the tube at a predetermined distance from each other below the level of the contents in the tube. The packages are separated from the tube by incisions along the transversal seals and are given the desired geometric configuration, normally parallelepipedal or cuboid, by fold formation along prepared crease lines in the laminated packaging material.

The main advantage of this continuous tube-forming, filling and heat sealing packaging method concept is that the web may be sterilised continuously just before tube-forming, thus providing for the possibility of an aseptic packaging method, i.e. a method wherein the liquid content to be filled as well as the laminated packaging material itself are reduced from bacteria and the filled packaging container is produced under clean conditions such that the filled package may be stored for a long time even at ambient temperature, without the risk of growth of micro-organisms in the filled product. Another important advantage of the Tetra Brik Aseptic^{®}-type packaging method is, as stated above, the possibility of continuous high-speed packaging, which has considerable impact on cost efficiency.

Packaging containers for sensitive liquid food, for example milk or juice, can also be produced from sheet-like blanks or prefabricated blanks of the laminated packaging material. From a tubular blank of the packaging laminate that is folded flat, packages are produced by first of all building the blank up to form an open tubular container capsule, of which one open end is closed off by means of folding and heat-heat sealing of integral end panels. The thus closed container capsule is filled with the food product in question, e.g. juice, through its open end, which is thereafter closed off by means of further folding and heat-heat sealing of corresponding integral end panels. An example of a packaging container produced from sheet-like and tubular blanks is the conventional so-called gable-top package. There are also packages of this type which have a moulded top and/or screw cap made of plastic.

A layer of an aluminium foil in the packaging laminate provides gas barrier properties quite superior to most polymeric gas barrier materials. The conventional aluminium-foil based packaging laminate for liquid food aseptic packaging is still the most cost-efficient laminated packaging material, at its level of performance, available on the market today.

Moreover, the aluminium foil enables heating and heat sealing of the laminated material by means of induction of an electrical current in the aluminium foil.

Any other material to compete with the aluminium-foil-based materials must be cost-efficient regarding raw materials, have comparable food preserving properties and have a comparably low complexity in the converting into a finished packaging laminate.

Among the efforts of developing non-aluminium-foil materials for liquid food carton packaging, there is also a general incentive towards developing premanufactured films or sheets having high and multiple barrier functionalities, i.e. not only oxygen and gas barrier but also water vapour-, chemical- or aroma-substance-barrier properties.

Further, there is a need to provide non-aluminium-foil materials for food carton packaging that, in addition to providing barrier functionalities, also are more climate-friendly since the manufacturing of aluminium foil leaves a rather high carbon footprint and moreover makes recycling processes for carton and plastics more difficult.

### Objects

It is, accordingly, an object of the present disclosure to provide a method for producing a cellulose-based sheet material for a laminated packaging material.

It is further objects of the present disclosure to provide a laminated packaging material and a packaging container for food products, such as a laminated packaging material and a packaging container for liquid, semi-solid or viscous food products.

These objects are thus attainable according to the present disclosure by the method as well as the laminated packaging material and by the packaging container for food products comprising the laminated packaging material, as defined in the appended claims.

### Summary

According to a first aspect, the above and other objects are achieved, in full or at least in part by a method as defined by claim 1. According to this claim, the above object is achieved by a method for producing a cellulose-based sheet material for a laminated packaging material, wherein the method comprises the steps of: (A1) providing a liquid dispersion comprising cellulosic material; (A2) providing a liquid dispersion comprising at least one carbon-based material chosen from the group consisting of graphite, graphene, graphene oxide and reduced graphene oxide; (B1) mixing the liquid dispersion provided in step A1 with the liquid dispersion provided in step A2 to obtain a mixture; (C1) subjecting the mixture obtained from step (B1) to draining of liquid through a porous substrate, followed by initial compression to obtain a compressed sheet of cellulosic material; and (D1) subjecting the compressed sheet cellulosic material obtained in step (C1) to pressing to obtain a pressed cellulosic material; to obtain a cellulose-based sheet material for a laminated packaging material.

A final step of drying the cellulose-based sheet material may be performed.

A step of intermediate, partial drying may be performed after step C1.

Preferably, in the first, second, third, fourth and fifth aspects according to the present disclosure, the dispersion provided in step (A2) comprises at least one carbon-based material chosen from the group consisting of graphene, graphene oxide and reduced graphene oxide, more preferred from the group consisting of graphene oxide and reduced graphene oxide. Such a dispersion may further comprise a small amount of graphite. Preferably, in such dispersions, the amount of graphite is very low, even more preferred, no graphite is present.

The carbon-based material of the first, second, third, fourth and fifth aspects according to the present disclosure may comprise one or more materials selected from the group consisting of exfoliated flakes of graphene, exfoliated flakes of graphene oxide, exfoliated flakes of reduced graphene oxide, graphene monolayer material, graphene oxide monolayer material, reduced graphene oxide monolayer material, and multilayer platelets, having up to 20, such as 10 or fewer, stacked monolayer flakes of graphene, graphene oxide or reduced graphene oxide.

The obtained cellulose-based sheet material may be a paper, a paperboard or a film.

The obtained cellulose-based sheet material may have a thickness of 10 to 500 µm, such as 25 to 500 µm, such as 50 to 450 µm, such as 100 to 400 µm, such as 150 to 350 µm, such as 200 to 300 µm, such as 15 to 100 µm, such as from 20 to 50 µm, such as from 25 to 45 µm.

The method may comprise an optional step of (E1) heating the cellulosic material before, during and/or after step (D1), to obtain a cellulose-based sheet material for a laminated packaging material. The resulting cellulose-based sheet material may thus be a heat-treated cellulose-based sheet material.

The dispersion provided in step (A1) may be an aqueous dispersion.

The composition provided in step (A2) may be a liquid dispersion.

The dispersion provided in step (A2) may be an aqueous dispersion, especially when the carbon-based material is graphene oxide or reduced graphene oxide.

The dispersion provided in step (A2) may be based on an organic solvent, especially when the carbon-based material is graphene.

Preferably, the carbon-based material comprised in the dispersion provided in step (A2) is graphene, graphene oxide and/or reduced graphene oxide. Even more preferred, the carbon-based material comprised in the dispersion provided in step (A2) is graphene oxide and/or reduced graphene oxide. The carbon-based material comprised in the dispersion provided in step (A2) may be graphene oxide.

Step (C1) may be performed under reduced pressure or vacuum.

Step (D1) may be performed under reduced pressure or vacuum.

Step (D1) may be performed more than once.

Optionally, steps (D1) and (E1) are performed several times, such as two to ten times, such as three to eight times, such as four to six times such as five times.

The pressing in step (D1) may suitably comprise calendering the compressed sheet of cellulosic material obtained in step (C1) to obtain a pressed and optionally heat-treated cellulose-based sheet material for a laminated packaging material. A calender may have one or several calender rolls. At least one of the rolls may be heated. Depending on the set-up of the calendering process, pressure and heat treatments may thus be performed as several steps, in any order suitable for the desired result. Usually, a set of pressure rollers are followed by one or a few heated rollers.

The temperature of the surface of the at least one heated calender roll may be 120 to 170°C, such as 120 to 160°C, such as 130 to 150°C, such as 140°C.

A suitable roller nip line load in the calendering step may be from 100 kN/m to 200 kN/m, such as above 200 kN/m, such as at least 300 kN/m, such as at least 450 kN/m, such at least 600 kN/m.

Specifically, the compressed sheet of cellulosic material obtained in step (C1) may in step (D1) be subjected to calendering in a calendering unit comprising at least two heated roller nips.

The moisture content of the compressed sheet of cellulosic material may be adjusted, such as to a moisture content of from 11 to 20 %, by an intermediate, partial drying step or by a re-moisturizing step, which may be applied to the compressed cellulosic material obtained in step (C1)just before the calendering operation.

The calendering operation may be performed in a super-calender having from 8 to 20 calender rolls, such as from 9 to 19 rolls, such as from 11 to 17 rolls, such as from 12 to 15 rolls. A supercalender may have several cylinders, i.e. rolls, alternating between polished metal and soft resilient surfaces.

The temperature of the surfaces of heated calender rolls may be 120 to 170°C, such as 120 to 160°C, such as 130 to 150°C, such as 140°C.

Calendering may further be performed by a calender roll arrangement having multiple rolls, such as at least 8 rolls, of which at least one roll is heated and of which at least one roll has a nip line load above 200 kN/m, such as at least 300 kN/m, such as at least 400 kN/m, such at least 600 kN/m.

Preferably, the cellulosic material in the dispersion provided in step (A1) is fibrous cellulose; and, optionally, further comprises microfibrillated cellulose and/or nanocrystalline cellulose. Thus, the resulting sheet material may be a paper or paperboard, optionally comprising a microfibrillated cellulose and/or nanocrystalline cellulose. In some cases, the resulting sheet material may be a film of mainly microfibrillated cellulose, optionally further comprising nanocrystalline cellulose.

As used herein, "fibrous cellulose" refers to cellulose fibers having a length of 1 mm up to 1 cm or longer, and a diameter of 10 to 50 µm.

As used herein, "microfibrillated cellulose" refers to cellulose fibers having a length of 0.5 µm to 1 mm, and a diameter of 10 to 50 µm.

As used herein, "nanocrystalline cellulose" refers to cellulose fibers having a length of 100 to 500 nm and a diameter of 10 to 20 nm.

The cellulosic material is suitably present in the dispersion provided in step (A1) in an amount of 0.05 to 2.0 wt%, such as 0.1 to 1.5 wt%, such as 0.1 to 1 wt%, such as 0.2 to 0.8 wt%, such as 0.3 to 0.7 wt%, such as 0.4 to 0.6 wt%, such as 0.5 wt%. These are examples of pulp consistencies for paper manufacturing from fibrous cellulose pulp.

The fibrous cellulose may be present in the resulting paper or paperboard in a total amount of at least 5 wt%, such as at least 10 wt%, such as at least 15 wt%, such as at least 20 wt%, such as at least 25 wt%, such as at least 30 wt%, such as at least 35 wt%, such as at least 40 wt%, such as at least 45 wt%, such as at least 50 wt%, such as at least 55 wt%, such as at least 60 wt%, such as at least 65 wt%, such as at least 70 wt%, such as at least 75 wt%, such as at least 80 wt%, such as at least 85 wt%, such as at least 90 wt%, such as at least 95 wt%.

The microfibrillated cellulose may be present in the resulting paper or paperboard in a total amount of 0.1 to 95 wt%, such as 0.5 to 90 wt%, such as 1 to 85 wt%, such as 5 to 80 wt%, such as 10 to 75 wt%, such as 15 to 70 wt%, such as 20 to 65 wt%, such as 25 to 60 wt%, such as 30 to 55 wt%, such as 35 to 50 wt%, such as 40 to 45 wt%.

In certain cases, the microfibrillated cellulose may be present in the resulting paper or paperboard in a total amount of 40 to 80 wt%, such as 45 to 75 wt%, such as 50 to 70 wt%, such as 55 to 65 wt%, such as 60 wt%. Such a paper or paperboard typically comprises fibrous cellulose in an amount of 20 to 60 wt% such as 25 to 55 wt%, such as 30 to 50 wt%, such as 35 to 45 wt%, such as 40 wt%, wherein the sum of the amounts of microfibrillated cellulose and fibrous cellulose is 100 wt% or close to 100 wt%, considering small amounts of additives that may be present. Further, such a paper or paperboard may additionally comprise up to 10 wt% nanocrystalline cellulose, wherein the sum of the amounts of microfibrillated cellulose, fibrous cellulose and nanocrystalline cellulose and fibrous cellulose is 100 wt% or close to 100 wt%, considering small amounts of additives that may be present.

In certain cases, the microfibrillated cellulose may be present in the resulting paper or paperboard in a total amount of less than 10 wt%, such as less than 5 wt %, such as between 0.1 to 5 wt%, such as 0.5 to 4 wt%, such as 1 to 3 wt%, such as 2 wt%.

In specific cases, the microfibrillated cellulose may be present in the resulting paper or paperboard in a total amount of 60 to 85 wt%, such as 65 to 85 wt%, such as 65 to 80 wt%, such as 65 to 75 wt%, such as 70 to 75 wt%. Such content of microfibrillated cellulose may be preferred in the manufacturing of so-called MFC films.

The nanocrystalline cellulose may be present in the resulting paper or paperboard in a total amount of less than 10 wt%, such as less than 5 wt %, such as between 0.1 to 5 wt%, such as 0.5 to 4 wt%, such as 1 to 3 wt%, such as 2 wt%.

When the resulting paper or paperboard comprises microfibrillated cellulose and/or nanocrystalline cellulose, the total amount of microfibrillated cellulose and/or nanocrystalline cellulose is less than 90 wt%, such as less than 80 wt%, such as less than 70 wt%, such as less than 60 wt%, such as less than 50 wt%, such as less than 40 wt%, such as less than 30 wt%, such as less than 20 wt%, such as less than 15 wt%, such as less than 10 wt%, such as less than 5 wt%. In certain cases, the total amount of microfibrillated cellulose and/or nanocrystalline cellulose in the obtained cellulose-based sheet material may be less than 15 wt%, such as less than 10 wt%, such as less than 5 wt %, such as between 0.1 to 5 wt%, such as 0.5 to 4 wt%, such as 1 to 3 wt%, such as 2 wt%.

The liquid dispersion provided in step (A1) is preferably paper pulp. Typically, paper pulp is an aqueous dispersion of fibrous cellulose.

The dispersion provided in step (A1) may be an aqueous dispersion. Suitably, the liquid dispersion provided in step (A2) comprises 1 to 25 wt% of the at least one carbon-based material, such as 4 to 25 wt%, such as 5 to 25 wt%, such as 10 to 25 wt%, such as 10 to 20 wt%.

Optionally, microfibrillated cellulose and/or nanocrystalline cellulose is present in the liquid dispersion provided in step (A2), which facilitates the dispersion of the carbon-based material in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion of graphene oxide or reduced graphene oxide. The weight ratio of graphene oxide and the microfibrillated cellulose and/or nanocrystalline cellulose (i.e. [carbon-based material] : [microfibrillated cellulose and/or nanocrystalline cellulose]) in the liquid dispersion provided in step (A2) may be 1:4 to 4:1, such as 1:3 to 3:1; such as 1:2 to 2:1, such as 1:1, as calculated per dry solid matter.

The amount of the at least one carbon-based material in the cellulose-based sheet material for a laminated packaging material obtained by the method may be 0.005 to 25 wt%, such as 0.05 to 25 wt%, such as 0.1 to 25 wt%, preferably 4 to 25 wt%, more preferred 5 to 25 wt%, more preferred 6 to 25 wt%, most preferred 6 to 20 wt%, based on dry weight. Specifically, the amount of the at least one carbon-based material in the cellulose-based sheet material for a laminated packaging material obtained by the method may be from 4 to 25 wt%.

Specifically, improved mechanically properties may be achieved by amounts as low as 0.005 wt% of the carbon-based material. Thus, the amount of the at least one carbon-based material in the cellulose-based sheet material for a laminated packaging material obtained by the method disclosed herein may be 0.005 to 5 wt%, such as 0.01 to 4 wt%, such as 0.05 to 3 wt%, such as 0.1 to 2 wt%, such as 0.15 to 1 wt%, such as 0.2 to 0.75 wt%, such as 0.25 to 0.5 wt%.

Specifically, improved gas-barrier properties may be achieved by amounts from 0.1 wt% of the carbon-based material. Thus, the amount of the at least one carbon-based material in the cellulose-based sheet material for a laminated packaging material obtained by the method disclosed herein may be 0.1 to 25 wt%, preferably 1 to 20 wt%, more preferred 2 to 15 wt%, more preferred 3 to 12 wt%, even more preferred 5 to 10 wt%, based on dry weight.

Specifically, induction heat-sealability of a laminated packaging material comprising the cellulose-based sheet material may be enabled at amounts from 4, such as from 5 wt% of the carbon-based material. Thus, the amount of the at least one carbon-based material may be present in the cellulose-based sheet material in an amount of 4 to 25 wt%, such as 5 to 25 wt%, such as 6 to 25 wt%, such as 6 to 20 wt%, such as 6 to 15 wt%, such as 6 to 12 wt%, such as 6 to 10 wt%, based on dry weight.

In specific cases, the at least one carbon-based material in the liquid dispersion provided in step (A2) is graphene oxide and/or reduced graphene oxide. Preferably the at least one carbon-based material in the liquid dispersion provided in step (A2) is graphene oxide. In certain cases, the graphene oxide and/or reduced graphene oxide is present in the liquid dispersion provided in step A2 in an amount of 1 to 25 wt%, such as 4 to 25 wt%, such as 5 to 25 wt%, such as 10 to 25 wt%, such as 10 to 20 wt%. Typically, the amount of graphene oxide and/or reduced graphene in the cellulose-based sheet material for a laminated packaging material obtained by the method is 0.005 to 25 wt%, such as 0.05 to 25 wt%, such as 0.1 to 25 wt%, preferably 4 to 25 wt%, more preferred 5 to 25 wt%, more preferred 6 to 25 wt%, most preferred 6 to 20 wt%, based on dry weight. Specifically, the amount of graphene oxide and/or reduced graphene in the cellulose-based sheet material for a laminated packaging material obtained by the method may be from 4 to 25 wt%.

According to an embodiment, when the liquid dispersion provided in step (A2) comprises graphene oxide, the method further comprises the step of (A3) providing an aqueous solution comprising a reducing agent; and wherein the liquid dispersion provided in step (A2) is obtained by the steps of (A2') providing a liquid dispersion comprising graphene oxide; and (A2") mixing the liquid dispersion provided in step (A2') with the aqueous solution provided in step (A3) and allowing the graphene oxide undergo reduction into reduced graphene oxide. The skilled person realizes that not all of the graphene oxide will necessarily be reduced to reduced graphene oxide, but that a mixture of graphene oxide and reduced graphene oxide may be the result. A small amount of microfibrillated cellulose may be added to the mixture (comprising graphene oxide and a reducing agent) obtained in step (A2") in order to stabilize the dispersion of graphene oxide in the mixture by reducing agglomeration. The weight ratio of graphene oxide and the microfibrillated cellulose and/or nanocrystalline cellulose (i.e. [graphene oxide] : [microfibrillated cellulose and/or nanocrystalline cellulose]) in the dispersion provided in step (A2) is typically between 1:4 to 4:1, such as 1:3 to 3:1; such as 1:2 to 2:1, such as 1:1.

The reducing agent may be chosen from the group consisting of C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid).The amount of the reducing agent in the solution provided in step (A3) may be 0.5 to 15 wt%, such as 1 to 14 wt%, such as 2 to 13 wt%, such as 3 to 10 wt%, such as 4 to 8 wt%, such as 5 to 7 wt%, such as 0.5 to 5 wt%, such as 0.5 to 2.5 wt%, such as 0.5 to 1.5 wt%.

The solution provided in step (A3) may be a saturated solution of vitamin C. Such a "pre-reducing" step of adding a reducing agent to an aqueous dispersion of graphene oxide has been proven to work well in prior art concerning dispersion coating of reduced graphene oxide onto a substrate, i.e. in the international publication WO2022136450A1. Such a dispersion and reducing method in an aqueous dispersion of graphene oxide is advantageous when a homogenous and complete reduction in dispersion of graphene oxide is desired, without agglomeration of the reduced graphene oxide in the aqueous dispersion.

Alternatively, or additionally, in embodiments wherein the liquid dispersion provided in step (A2) comprises graphene oxide, the optionally heat-treated cellulose-based sheet material for a laminated packaging material obtained after either of steps (D1) or (E1) may be treated with an aqueous solution comprising a reducing agent provided in step (A3), as separate application step (F1). The reducing agent may be chosen from the group consisting of C-vitamin (ascorbic acid), formic acid, oxalic acid, acetic acid, benzoic acid, lemon juice, vinegar, green tea and combinations thereof. In some cases, the reducing agent may be chosen from the group consisting of C-vitamin (ascorbic acid), formic acid, oxalic acid and combinations thereof. Preferably, the reducing agent is C-vitamin (ascorbic acid). The amount of the reducing agent in the solution provided in step (A3) may be 0.5 to 15 wt%, such as 1 to 14 wt%, such as 2 to 13 wt%, such as 3 to 10 wt%, such as 4 to 8 wt%, such as 5 to 7 wt%, such as 0.5 to 5 wt%, such as 0.5 to 2.5 wt%, such as 0.5 to 1.5 wt%.

Alternatively, or additionally, in embodiments wherein the liquid dispersion provided in step (A2) comprises graphene oxide, the optionally heat treated cellulose-based sheet material for a laminated packaging material obtained after either of steps (D1) or (E1) may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such 190°C, in order to reduce graphene oxide into reduced graphene oxide. The heat reducing temperature may preferably be 170-190°C, such as 175-190°C, such as 180-190°C. Preferably, the temperature is as low as possible, preferably at most 190°C (such as 170 to 190°C), or even at most 180°C (such as 170 to 180°C), since the properties of cellulose are altered at high temperatures. For example, the material can be miscoloured or release a specific smell, which may be undesirable if the resulting material is to be used e.g. as a food packaging material. In an embodiment comprising a heat reducing step as described above, addition of a reducing agent may even be omitted. This is obviously preferable since it removes the complexity of having to add a reducing agent in a separate step (A3) and mixing with and allowing it to reduce the graphene oxide in a further step (A2"), or applying it in step (F1). The skilled person realizes that not all of the graphene oxide will necessarily be reduced to reduced graphene oxide, but that a mixture of graphene oxide and reduced graphene oxide may be the result.

In a second aspect of the present disclosure there is provided a laminated packaging material comprising an outermost protective layer; an innermost layer, wherein the innermost layer is liquid tight and heat-sealable; a cellulose-based sheet material comprising cellulosic material, wherein the cellulose-based sheet material is disposed between the outermost protective layer and the innermost layer; wherein a carbon-based material is distributed throughout the cellulose-based sheet material; and wherein the carbon-based material is at least one carbon-based material chosen from the group consisting of graphite, graphene, graphene oxide and reduced graphene oxide. Thus, the laminated packaging material comprises a cellulose-based sheet material obtainable by the method according to the first aspect of the present disclosure.

Preferably, the outermost protective layer is protective against moisture and/or dirt. In some cases, the outermost protective layer is liquid tight.

Preferably, the innermost layer is a material having thermoplastic properties. The innermost layer may thus be a thermoplastic polymer, such as a polyolefin, such as polyethylene or polypropylene.

In a package container formed from the package material according to the present disclosure, the innermost layer faces the inside of the package container. Thus, when the package container is filled with a food product, the food product will be in contact with the innermost layer.

The cellulose-based sheet material may have a thickness of 10 to 500 µm, such as 25 to 500 µm, such as 50 to 450 µm, such as 100 to 400 µm, such as 150 to 350 µm, such as 200 to 300 µm, such as 15 to 100 µm, such as from 20 to 50 µm, such as from 25 to 45 µm.

The cellulose-based sheet material may be a paper or a paperboard comprising an amount of microfibrillated cellulose and/or nanocrystalline cellulose as described above. In some cases, the cellulose-based sheet material may be a so-called "film" of microfibrillated cellulose.

According to one preferred embodiment, the laminated packaging material further comprises a core layer comprising cellulosic material, wherein the core layer is disposed between the outermost protective layer and the cellulose-based sheet material, preferably wherein the core layer and the outermost protective layer are laminated to each other. The core layer and the outermost protective layer are laminated to each other, either to be directly contacting each other or by an intermediate bonding layer or adhesive.

The core layer may have a coating on the side facing the outermost protective layer. The coating may comprise starch, chitosan, ethylene-vinyl alcohol (EVOH), polyvinyl alcohol (PVOH) and/or may be a so-called clay-coat or pigment coating to serve as a smooth print surface.

According to an embodiment, the carbon-based material is present in the cellulose-based sheet material in an amount of 0.005 to 25 wt%, such as 0.05 to 25 wt%, such as 0.1 to 25 wt%, preferably 4 to 25 wt%, more preferred 5 to 25 wt%, more preferred 6 to 25 wt%, most preferred 6 to 20 wt%, based on dry weight. Specifically, the amount of the carbon-based material is present in the cellulose-based sheet material in an amount of from 4 to 25 wt%.

Specifically, improved mechanical properties may be seen at amounts as low as 0.005 wt% of the carbon-based material. Thus, the amount of the at least one carbon-based material in the cellulose-based sheet material for a laminated packaging material obtained by the method disclosed herein may be 0.005 to 5 wt%, such as 0.01 to 4 wt%, such as 0.05 to 3 wt%, such as 0.1 to 2 wt%, such as 0.15 to 1 wt%, such as 0.2 to 0.75 wt%, such as 0.25 to 0.5 wt%.

Specifically, improved gas-barrier properties may be seen at amounts from 0.1 wt% of the carbon-based material. Thus, the amount of the at least one carbon-based material in the cellulose-based sheet material for a laminated packaging material obtained by the method disclosed herein may be 0.1 to 25 wt%, preferably 1 to 20 wt%, more preferred 2 to 15 wt%, more preferred 3 to 12 wt%, even more preferred 5 to 10 wt%.

In a preferred embodiment, the carbon-based material is graphene or reduced graphene oxide. These forms of carbon-based materials, in the form of flakes or laminar particles, are less bulky than the oxygen-containing graphene oxide particles and allow the layered flakes to lie closer to each other in the materials in which they are distributed. This allows for better oxygen barrier properties as well as for improved conductivity.

The cellulosic material may be fibrous cellulose; and, optionally, further comprises microfibrillated cellulose and/or nanocrystalline cellulose. Thus, the cellulosed-based sheet material may be a paper or paperboard based on fibrous cellulose, optionally comprising a microfibrillated cellulose and/or nanocrystalline cellulose. In some cases, the resulting sheet material may be a film comprising a major part of microfibrillated cellulose, optionally including nanocrystalline cellulose.

Preferably, the cellulose-based sheet material is paper or paperboard. This is preferred for recyclability properties, such as for shorter re-pulping times and for better enabling re-use of recycled cellulose material in a circular system (so-called "circular economy") than being the case regarding polymer materials.

Preferably, the cellulose-based sheet material is produced by the method according to the present disclosure, for ensuring homogenous distribution of the carbon-based material in the sheet material.

In a third aspect of the present disclosure there is provided the heat sealing of packages formed from the laminated packaging material according to any one of claims 7 to 13 by induction heating. In such applications, the carbon-based material is present in the cellulose-based sheet material in an amount of 4 to 25 wt%, such as 5 to 25 wt%, such as 6 to 25 wt%, such as 6 to 20 wt%, such as 6 to 15 wt%, such as 6 to 12 wt%, such as 6 to 10 wt%, based on dry weight. Specifically, the amount of the carbon-based material is present in the cellulose-based sheet material in an amount of from 4 to 25 wt%.

For the purpose of induction heat sealing of packages from the laminated packaging material, an alternating magnetic field is applied to a portion of the package where the heat seal is to be formed. An electric current is generated in the layer comprising the cellulosic material and the carbon-based material, in turn heating the layers adjacent to it. The carbon-based material comprises graphene or reduced graphene oxide. The generated heat in the adjacent innermost liquid-tight, thermoplastic layer melts the thermoplastic material such that molecular mobility increases and causes molecular disentanglement and molecular interbonding between the two surfaces that are pressed together to cause a heat welded bond, i.e. a heat seal. Thus, the innermost liquid-tight layer comprises a material having thermoplastic properties, which will melt when heated and adhere to the adjacent thermoplastic material to form a heat seal.

Preferably, the magnetic field has a frequency in the MHz range, such as up to about 27 MHz. Within the higher MHz range, specific frequency bands are allocated by national authorities, such as 13.65 MHz and 27.12 MHz. At lower ranges, the frequency of operations may be more freely selected. Preferably, the electromagnetic device is operating at a frequency from 0.5 MHz to about 27 MHz, such as from 1 MHz to about 27 MHz such as from 13 MHz to about 27 MHz.

Preferably, the magnetic field is applied for a short time period in the millisecond range, such as 50 to 1000 ms, such as 100 to 1000 ms, such as 200 to 1000 ms, such as 300 to 1000 ms, such as 400 to 1000 ms, such as 500 to 1000 ms.

The package may be formed such that, in the portion where the heat seal is to be created, the innermost liquid-tight layer faces the outermost protective layer.

Alternatively, the package may be formed such that, in the portion where the heat seal is to be created, the innermost liquid-tight layer faces another part of the innermost layer.

The package may be formed by combining heat seals formed in the two alternative ways above.

For heat sealing of e.g. corner flaps on the outside of the package, heat seals may further be created such that, in the portion where the heat seal is to be created, the outermost liquid-tight layer faces the outermost protective layer.

When the outermost, protective layer takes part in forming heat seals, the outermost layer is also of thermoplastic nature such that it is heat sealable to itself or to the innermost liquid-tight layer.

In a fourth aspect of the present disclosure there is provided a packaging container for food products, the packaging container comprising the laminated packaging material according to the second aspect.

In a packaging container made from a laminated packaging material according to the second aspect, the innermost layer of the laminated packaging material faces the inside of the packaging container. When the packaging container contains a food product, the innermost layer of the laminated packaging material is in contact with the food product.

In a fifth aspect of the present disclosure there is provided the use of the laminated packaging material according to the present disclosure for forming and heat sealing of a packaging container.

Other objectives, features and advantages of the present disclosure will appear from the following detailed description, from the experiments, as well as from the attached claims. It is noted that the disclosure relates to all possible combination of features.

Generally, all terms used in the claims are to be interpreted according to their ordinary meaning in the technical field, unless explicitly defined otherwise herein. All references to "a/an/the [component, means, step, etc.]" are to be interpreted openly as referring to at least one instance of said component, means, step, etc., unless explicitly stated otherwise. The steps of any method disclosed herein do not have to be performed in the exact order disclosed, unless explicitly stated.

As used herein, the term "comprising" and variations of that term are not intended to exclude other additives, components, integers or steps.

As used herein, the term "wt%" denotes "weight/weight %".

Preferably, in the first, second, third, fourth and fifth aspects according to the present disclosure, the dispersion provided in step (A2) comprises at least one carbon-based material chosen from the group consisting of graphene, graphene oxide and reduced graphene oxide, more preferred from the group consisting of graphene oxide and reduced graphene oxide. Such a dispersion may further comprise a small amount of graphite. Preferably, in such dispersions, the amount of graphite is very low, even more preferred, no graphite is present.

The carbon-based material of the first, second, third, fourth and fifth aspects according to the present disclosure may comprise one or more materials selected from the group consisting of exfoliated flakes of graphene, exfoliated flakes of graphene oxide, exfoliated flakes of reduced graphene oxide, graphene monolayer material, graphene oxide monolayer material, reduced graphene oxide monolayer material, and multilayer platelets, having up to 20, such as 10 or fewer, stacked monolayer flakes of graphene, graphene oxide or reduced graphene oxide.

Graphite is a crystalline form of carbon and consists of stacked layers of graphene. It is a (but not excellent) conductor of both heat and electricity. Graphite is insoluble in water and organic solvents.

Graphene consists of a single layer of carbon atoms arranged in a hexagonal lattice nanostructure. Graphene is not dispersible in water but organic solvents. However, it may be dispersed in a mixture of water and organic solvents, if needed with the aid of surfactants. Specifically, when used according to the present disclosure, graphene is not silica-coated. Silica-coated graphene may negatively impact the adhesion of the resulting material to other materials.

Graphene oxide (GO) is dispersible in water and organic solvents. The concentration of the dispersion may be 0.05 mg/mL to 5 mg/mL. Graphene oxide shows low electrical conductivity. The term "graphene oxide" includes monolayer flakes of graphene oxide and multilayer graphene oxide platelets, having up to 20, such as 2-10, stacked monolayer flakes of graphene oxide. Only smaller amounts, i.e. lower than 15 wt%, such as lower than 10 wt%, such as lower than 5 wt%, such as lower than 2 wt%, based on dry weight of the graphene oxide material, may be graphite oxide flakes that have been exfoliated to a number of graphene oxide monolayer flakes higher than 20, but which have a smaller lateral particle size than bulky graphite oxide particles, i.e. so-called "graphite oxide nano-platelets", which are thus still nano-sized. Such smaller amounts of such laterally nano-sized graphite flakes may be present as long as they do not reduce the performance of the graphene-based material too much. Preferably, nano-graphite flakes/platelets are present in the liquid dispersion only in lower amounts than 15 wt%, such as 10 wt%, such as 5 wt% or less, such as 2 wt% or less, based on dry weight of the carbon-based material. Suitable graphene oxide materials for aqueous dispersions, useable for the first, second, third, fourth and fifth aspects of the present disclosure, are e.g. a pure quality, exfoliated to at least 95 %, from Graphenea, Spain, or paste graphene oxide from LayerOne, Norway.

Reduced graphene oxide (rGO) contains residual oxygen and other heteroatoms, as well as structural defects and thus differs from (non-reduced) graphene. Reduced graphene oxide has better conductive properties than graphene oxide.

Herein, microfibrillated cellulose (MFC) is to be understood as a material comprising microfibrils with a diameter range of 10 to 1,000 nm and a length of at least 1 µm, such as up to 10 µm, such as up to 100 µm. The microfibrils form a three- dimensional network and have crystalline and amorphous regions. Microfibrillated cellulose (MFC) is obtained through a fibrillation process of cellulose fibers. Using mechanical shearing, the cellulose fibers are separated into a three-dimensional network of microfibrils with a large surface area.

Microfibrillated cellulose is sometimes also referred to as nanofibrillated cellulose (NFC).

Herein, the term nano-crystalline cellulose (NCC) is to be understood as shorter particles and "rod-like" particles, having a diameter of 3 to100 nm and a length from 100 to 3,000 nm, such as from 100 to 1,000 nm, such as from 100 to 500 nm.

Both MFC and NFC have an aspect ratio of 50 or above, while NCC/ CNC may be defined to have an aspect ratio below 50 (in accordance with ISO/TS 20477:2017 and the draft TAPPI norm WI3021.

### Brief Description of the Drawings

In the following, preferred embodiments of the disclosure will be described with reference to the drawing, in which:
Fig. 1 shows a schematic drawing of one embodiment of the method according to the present disclosure.
Figs. 2a-b show embodiments of the laminated packaging material according to the present disclosure.
Fig. 3 shows one embodiment of a packaging container formed from the laminated packaging material according to the present disclosure.
Fig. 4 shows an embodiment of how a packaging container is formed from the laminated packaging material according to the present disclosure.
Fig. 5 shows another embodiment of how a packaging container is manufactured from the laminated packaging material according to the present disclosure, and
Figs. 6a-6c show the electrical resistance measured for different cellulose-based sheet materials according to the present disclosure.

### Detailed Description

One object of the present disclosure is to provide a non-aluminium-foil material for oxygen-sensitive food carton packaging. The material obtained by the method according to the present disclosure is a cellulose-based sheet material that has good barrier properties, such as against oxygen, odour, light, water and vapour. In addition, such a material may also facilitate heat sealing of a foldformed package.

In short, the obtained material comprises at least one carbon-based material chosen from the group consisting of graphite, graphene, graphene oxide and reduced graphene. In the cellulose-based sheet material, the carbon-based material is distributed throughout the sheet material, forming evenly aligned layers of oriented particles or flakes. Since the carbon-based material may be a good electrical conductor, the cellulose-based sheet material may enable heat sealing of a package material, comprising the cellulose-based sheet material, by induction heating. Preferably, the carbon-based material comprises only very low amounts of graphite, such as lower than 2 wt%, based on dry weight of the carbon-based material. Most preferably, the carbon-based material comprises no graphite.

The good barrier properties are a result of a "tortoise effect", where the flake-shaped or laminar carbon-based particles form a layered material, and are distributed throughout the cellulose-based sheet material such that migrating matter, e.g. oxygen, odour, light, water and vapour, must pass via a substantially longer migration path in order to penetrate the cellulose-based sheet material. Thus, the barrier function is not only dependent on the presence of the carbon-based material, but also on the thickness of the cellulose-based sheet material.

In the following, the different aspects of the present disclosure will be described in more detail.

### Method for producing a material for a laminated packaging material

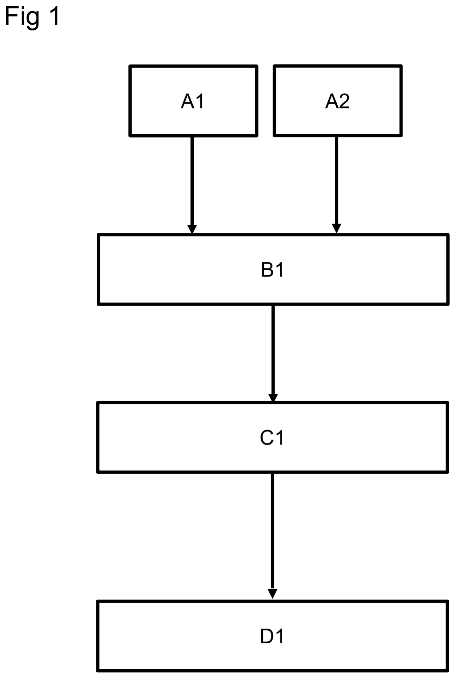

Specifically, the present disclosure relates to a method for producing a material for a laminated packaging material. In short, the method comprises the steps of (A1) providing a liquid dispersion comprising cellulosic material; (A2) providing a liquid dispersion comprising at least one carbon-based material chosen from the group consisting of graphite, graphene, graphene oxide and reduced graphene oxide; (B1) mixing the dispersion provided in step A1 with the dispersion provided in step A2 to obtain a mixture; (C1) subjecting the mixture obtained in step (B1) to draining of the liquid through a porous substrate, followed by initial compression to obtain a compressed sheet of cellulosic material; (D1) subjecting the compressed sheet of cellulosic material obtained in step (C1) to pressing to obtain a pressed sheet of cellulosic material; to obtain a cellulose-based sheet material for a laminated packaging material. Thus, in its simplest form (show schematically in Fig. 1), the method comprises the steps
(A1) - (A2) - (B1) - (C1) - (D1).

A final step of drying the cellulose-based sheet material may be performed.

The porous substrate for draining of the liquid from the mixture obtained in step (B1) may be wire or forming fabric as used in conventional paper manufacturing processes.

A step of intermediate, partial drying may be performed after step C1 on the compressed sheet of cellulosic material, by letting it pass at least one heated drying cylinder. If, on the other hand, the compressed sheet has become too dry, a step of remoisturizing it may be needed, to obtain a moisture content from 11 to 20 %.

Optionally, the method further comprises a step of (E1) heating the compressed sheet of cellulosic material before, during and/or after step (D1). Further drying of the cellulosic material naturally may occur upon such further heating. Optionally, steps (D1) and (E1) are performed several times, such as two to ten times, such as three to eight times, such as four to six times such as five times. Such a method may be described as comprising the steps
(A1)- (A2) - (B1) - (C1) - [(E1) - (D1)]₁₋₁₀;
(A1) - (A2) - (B1) - (C1) - [(D1; E1)]₁₋₁₀; or
(A1) - (A2) - (B1) - (C1) - [(D1) - (E1) ]₁₋₁₀.

When the liquid dispersion provided in step (A2) comprises graphene oxide, the method may further comprise the step of (A3) providing an aqueous solution comprising a reducing agent; wherein the liquid dispersion provided in step (A2) is obtained by the steps of (A2') providing a liquid dispersion comprising graphene oxide; and (A2") mixing the dispersion provided in step (A2') with the aqueous solution provided in step (A3) and allowing the graphene oxide to undergo reduction before performing step (B1). As disclosed above, a small amount, such as up to 5 wt%, of microfibrillated or nanocrystalline cellulose may be added to the mixture (comprising graphene oxide and a reducing agent) obtained in step (A2") in order to stabilize the dispersion of graphene oxide in the mixture by counteracting agglomeration.

Such a method may be described as comprising the steps
(A1) - (A3) - (A2') - (A2") - (B1) - (C1) - (D1);
(A1) - (A3) - (A2') - (A2") - (B1) - (C1) - [(E1) - (D1)]₁₋₁₀;
(A1) - (A3) - (A2') - (A2") - (B1) - (C1) - [(D1; E1)]₁₋₁₀; or
(A1) - (A3) - (A2') - (A2") - (B1) - (C1) - [(D1) - (E1)]₁₋₁₀.

Alternatively or additionally, when the liquid dispersion provided in step (A2) comprises graphene oxide, the method may further comprise the step of (A3) providing an aqueous solution comprising a reducing agent; and (F1) treating the sheet of cellulosic material, or the cellulose-based sheet material for a laminated packaging material, obtained after either of steps (D1) or (E1), respectively, with the solution comprising the reducing agent of step (A3). Such a method may be described as comprising the steps
(A1) - (A2) - (A3) - (B1) - (C1) - (D1) - (F1);
(A1) - (A2) - (A3) - (B1) - (C1) - [(E1) - (F1) - (D1)]₁₋₁₀;
(A1) - (A2) - (A3) - (B1) - (C1) - [(E1) - (D1) - (F1)]₁-₁₀;
(A1) - (A2) - (A3) - (B1) - (C1) - [(E1) - (D1)]₁₋₁₀ - (F1);
(A1) - (A2) - (A3) - (B1) - (C1) - [(D1; E1)]₁₋₁₀ - (F1);
(A1) - (A2) - (A3) - (B1) - (C1) - [(D1) - (F1) - (E1) ]₁₋₁₀;
(A1) - (A2) - (A3) - (B1) - (C1) - [(D1) - (E1) - (F1)]₁-₁₀;
(A1) - (A2) - (A3) - (B1) - (C1) - [(D1) - (E1)]₁₋₁₀ - (F1);
(A1) - (A3) - (A2') - (A2") - (B1) - (C1) - (D1) - (F1);
(A1) - (A3) - (A2') - (A2") - (B1) - (C1) - [(E1) - (F1) - (D1)]₁₋₁₀;
(A1) - (A3) - (A2') - (A2") - (B1) - (C1) - [(E1) - (D1) - (F1)]₁-₁₀;
(A1) - (A3) - (A2') - (A2") - (B1) - (C1) - [(E1) - (D1)]₁₋₁₀ - (F1);
(A1) - (A3) - (A2') - (A2") - (B1) - (C1) - [(D1; E1)]₁₋₁₀ - (F1);
(A1) - (A3) - (A2') - (A2") - (B1) - (C1) - [(D1) - (F1) - (E1) ]₁₋₁₀;2'
(A1) - (A3) - (A2') - (A2") - (B1) - (C1) - [(D1) - (E1) - (F1)]₁-₁₀;
(A1) - (A3) - (A2') - (A2") - (B1) - (C1) - [(D1) - (E1)]₁₋₁₀ - (F1);

In the following, each of these steps will be described in more detail. The skilled person realises that the different features of each step may be combined with features of any other step.

In the alternative embodiment, the aqueous solution comprising a reducing agent is thus only provided in step A3, but not added to perform reduction of the graphene oxide until the pressed sheet of cellulosic material has been formed after step D1, or until the final cellulose-based sheet material has been formed after step E1, as a step F1. There is thus no step of adding the solution of the reducing agent provided in A3 to the liquid dispersion A1 of graphene oxide, before the mixing step B1.

### Step (A 1)

Step (A1) is a step of providing a liquid dispersion comprising cellulosic material.

Preferably, the liquid dispersion is an aqueous dispersion.

The cellulosic material may be present in the liquid dispersion in an amount of 0.05 to 2.0 wt%, such as 0.1 to 1.5 wt%, such as 0.1 to 1 wt%, such as 0.2 to 0.8 wt%, such as 0.3 to 0.7 wt%, such as 0.4 to 0.6 wt%, such as 0.5 wt%.

The dispersion may comprise additives, such as for example wetting agents, fillers, retention agents, hydrofobization agents (also referred to as sizing agents) and colorants. Examples of sizing agents are ASA (Alkenyl Succinic Anhydride), AKD (Alkyl ketene dimer), starch, and rosin acids.

The cellulosic material in the dispersion provided in step (A1) may be fibrous cellulose and may, optionally, further comprise microfibrillated cellulose and/or nanocrystalline cellulose.

The liquid dispersion provided in step (A1) may be paper pulp (a dispersion comprising fibrous cellulose). The obtained sheet material will thus be a paper or paperboard.

The liquid dispersion provided in step (A1) may be paper pulp (a dispersion comprising fibrous cellulose) and microfibrillated cellulose. The obtained sheet material will thus be a paper or paperboard comprising microfibrillated cellulose.

The cellulosic material in the dispersion provided in step (A1) may comprise mainly of, such as up to 80 wt%, microfibrillated cellulose, optionally comprising a small amount, such as less than 10 wt% of the total amount of cellulosic material, nanocrystalline cellulose. The obtained sheet material may thus be a film or paper comprising a majority of microfibrillated cellulose, optionally comprising a small amount nanocrystalline cellulose. The obtained sheet material may further comprise from 20 wt% to 100 wt% of fibrous cellulose.

When the cellulosic material in the dispersion in step (A1) comprises fibrous cellulose, such as when the liquid dispersion in step (A1) is paper pulp, an addition of microfibrillated cellulose and/or nanocrystalline cellulose in the dispersion provided in step (A2) will facilitate the dispersion of the carbon-based material in the dispersion provided in step (A2), especially when the dispersion is based on water, (see below for details) and thus also in the mixture obtained in step (B1).

### Step (A2)

Step (A2) is a step of providing a dispersion comprising at least one carbon-based material chosen from the group consisting of graphite, graphene, graphene oxide and reduced graphene oxide.

Preferably, the carbon-based material comprised in the dispersion provided in step (A2) is graphene, graphene oxide, and/or reduced graphene oxide. Even more preferred, the carbon-based material comprised in the dispersion provided in step (A2) is graphene oxide and/or reduced graphene oxide. The carbon-based material comprised in the dispersion provided in step (A2) may be graphene oxide.

The dispersion provided in step (A2) may comprise 1 to 25 wt% of the at least one carbon-based material, such as 4 to 25 wt%, such as 5 to 25 wt%, such as 10 to 25 wt%, such as 10 to 20 wt%, of the at least one carbon-based material.

The dispersion provided in step (A2) may be an aqueous dispersion, especially when the carbon-based material is graphene oxide.

The dispersion provided in step (A2) may be based on an organic solvent, especially when the carbon-based material is graphene.

Optionally, microfibrillated cellulose and/or nanocrystalline cellulose is also present in the dispersion provided in step (A2), which facilitates the dispersion of graphene oxide and/or reduced graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and/or reduced graphene oxide and the microfibrillated cellulose and/or nanocrystalline cellulose (i.e. [graphene oxide and/or reduced graphene oxide] : [microfibrillated cellulose and/or nanocrystalline cellulose]) in the dispersion provided in step (A2) is 1:4 to 4:1, such as 1:3 to 3:1; such as 1:2 to 2:1, such as 1:1.

### Optional step (A2')

Step (A2') is a step of providing a dispersion comprising graphene oxide and is performed as described for step (A2).

### Optional step (A2")

Step (A2") is an optional step of mixing the dispersion provided in step (A2') with the aqueous solution provided in step (A3) and allowing the graphene oxide to undergo reduction.

### Optional step (A3)

Step (A3) is an optional step of providing an aqueous solution comprising a reducing agent.

The reducing agent may be chosen from the group consisting of C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid).

The amount of the reducing agent in the solution provided in step (A3) may be 0.5 to 15 wt%, such as 1 to 14 wt%, such as 2 to 13 wt%, such as 3 to 10 wt%, such as 4 to 8 wt%, such as 5 to 7 wt%, such as 0.5 to 5 wt%, such as 0.5 to 2.5 wt%, such as 0.5 to 1.5 wt%, of the solution.

### Step (B1)

Step (B1) is a step of mixing the dispersion provided in step A1 with the dispersion provided in step A2 to obtain a mixture.

### Step (C1)

Step (C1) is a step of subjecting the mixture obtained in step (B1) to draining of the liquid through a porous substrate, followed by initial compression to obtain a compressed sheet of cellulosic material.

Step (C1) may be performed under reduced pressure or vacuum.

Step (C1) is performed in order to reduce the water content of the mixture obtained in step (B1).

An optional step of intermediate, partial drying may be performed after step C1.

### Step (D1)

Step (D1) is a step of subjecting the compressed sheet of cellulosic material obtained in step (C1) to pressing to obtain a pressed sheet of cellulosic material.

Step (D1) may be performed under reduced pressure or vacuum.

Step (D1) may be performed more than once.

During step (D1), the carbon-based material is compressed and contact between flakes of the carbon-based material is achieved.

The pressing in step D1 may primarily comprise calendering the compressed sheet of cellulosic material obtained in step (C1). A calender may have one or several calender rolls. At least one of the rolls may be heated.

The temperature of the surface of the at least one heated calender roll may be 120 to 170°C, such as 120 to 160°C, such as 130 to 150°C, such as 140°C.

A suitable roller nip line load in the calendering step may be above 200 kN/m, such as at least 300 kN/m, such as at least 450 kN/m, such at least 600 kN/m.

Specifically, the compressed cellulosic material obtained in step (C1) may be subjected to calendering in a calendering unit comprising at least two heated roller nips.

The moisture content may be adjusted, such as to a moisture content of from 11 to 20 % of the compressed sheet of cellulosic material obtained in step (C1)just before the calendering operation, if needed. This may require drying or remoisturizing the compressed sheet of cellulosic material.

The calendering operation may be performed in a super-calender having from 8 to 20 calender rolls, such as from 9 to 19 rolls, such as from 11 to 17 rolls, such as from 12 to 15 rolls. A supercalender may have several cylinders, i.e. rolls, alternating between polished metal and soft resilient surfaces.

At least one roller nip in the calendering step may may have a nip line load above 200 kN/m, such as at least 300 kN/m, such as at least 450 kN/m, such at least 600 kN/m. The temperature of the surface of at least one heated calender roll may be 120 to 170°C, such as 120 to 160°C, such as 130 to 150°C, such as 140°C.

### Optional step (E1)

Step (E1) is an optional step of heating the sheet of cellulosic material before, during and/or after step (D1).

This step may be performed to further reduce the water content of the sheet of cellulosic material.

Alternatively, or also, step (E1) may be performed to reduce graphene oxide to form reduced graphene oxide. The skilled person realizes that not all of the graphene oxide will necessarily be reduced to reduced graphene oxide, but that a mixture of graphene oxide and reduced graphene oxide may be the result.

Optionally, steps (D1) and (E1) may each be performed several times, by several pressing and/or heating rolls, such as two to ten times, such as three to eight times, such as four to six times such as five times. Steps (D1) and (E1) may be combined into a same operation of calendering the sheet of cellulosic material, including passage between one or more heated rollers.

### Optional step (F1)

Step (F1) is an optional step of treating the sheet of cellulosic material or the cellulose-based sheet material for a laminated packaging material obtained after either of steps (D1) or (E1), respectively, with the solution comprising the reducing agent provided in step (A3), in order to reduce graphene oxide.

In this step, in embodiments when the carbon-based material is graphene oxide, the sheet of cellulosic material or the cellulose-based sheet material for a laminated packaging material obtained after either of steps (D1) or (E1) respectively, is treated with an aqueous solution provided in step (A3) comprising a reducing agent, to reduce the graphene oxide. The reducing agent may be C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid). The amount of the reducing agent in the solution may be 0.5 to 15 wt%, such as 1 to 14 wt %, such as 2 to 13 wt%, such as 3 to 10 wt%, such as 4 to 8 wt%, such as 5 to 7 wt%, such as 0.5 to 5 wt%, such as 0.5 to 2.5 wt%, such as 0.5 to 1.5 wt%, of the solution.

Alternatively, or additionally, in embodiments when the carbon-based material is graphene oxide, the sheet of the compressed cellulosic material or the cellulose-based sheet material for a laminated packaging material obtained during or after either of steps (D1) or (E1), respectively, may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, the sheet of the compressed cellulosic material or the cellulose-based sheet material may be heated to 190°C during 30-60 seconds.

### Specific embodiments of the method resulting in a paper or paperboard

In a first specific embodiment of the method according to the present disclosure, the method comprises the steps (A1) - (A2) - (B1) - (C1) - (D1). The dispersion provided in step (A1) is an aqueous dispersion comprising fibrous cellulose, i.e. paper pulp, and the dispersion provided in step (A2) comprises graphene, graphene oxide and/or reduced graphene oxide in an amount of 1 to 25 wt% of the dispersion. The resulting sheet material is a paper or paperboard.

Optionally, the dispersion provided in step (A1) also comprises microfibrillated cellulose and/or nanocrystalline cellulose.

Specifically, the dispersion provided in step (A2) comprises graphene, graphene oxide and/or reduced graphene oxide in an amount of 4 to 25 wt%, such as 5 to 25 wt%, such as 10 to 25 wt%, such as 10 to 20 wt%, of the dispersion.

Preferably, the dispersion provided in step (A2) comprises graphene oxide and/or reduced graphene oxide in the amounts specified. Even more preferred, the dispersion provided in step (A2) comprises graphene oxide.

The liquid dispersion provided in step (A2) may be an aqueous dispersion, especially when the carbon-based material is graphene oxide.

The liquid dispersion provided in step (A2) may be based on an organic solvent, especially when the carbon-based material is graphene.

Optionally, microfibrillated cellulose and/or nanocrystalline cellulose is also present in the dispersion provided in step (A2), which facilitates the dispersion of graphene oxide and/or reduced graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and/or reduced graphene oxide and the microfibrillated cellulose and/or nanocrystalline cellulose (i.e. [graphene oxide and/or reduced graphene oxide] : [microfibrillated cellulose and/or nanocrystalline cellulose]) in the dispersion provided in step (A2) is 1:4 to 4:1, such as 1:3 to 3:1; such as 1:2 to 2:1, such as 1:1.

Preferably, Step (C1) is performed under reduced pressure or vacuum.

Step (D1) is performed by calendering. The temperature of the surfaces of heated calender rolls is 120 to 170°C, such as 120 to 160°C, such as 130 to 150°C, such as 140°C. A suitable roller nip line load in the calendering step may be above 200 kN/m, such as at least 300 kN/m, such as at least 450 kN/m, such at least 600 kN/m.

Optionally, when the dispersion provided in step (A2) comprises graphene oxide, the resulting paper or paperboard obtained during or after step (D1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting paper or paperboard has a thickness of 10 to 500 µm, such as 25 to 500 µm, such as 50 to 450 µm, such as 100 to 400 µm, such as 150 to 350 µm, such as 200 to 300 µm, such as 15 to 100 µm, such as from 20 to 50 µm, such as from 25 to 45 µm.

The amount of graphene, graphene oxide and/or reduced graphene oxide in the paper or paperboard obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the amount of graphene, graphene oxide and/or reduced graphene oxide in the paper or paperboard obtained by the method is 4 to 25 wt%, based on dry weight.

Preferably, if present, the total amount of microfibrillated cellulose and/or nanocrystalline cellulose in the resulting paper or paperboard is less than 15 wt%, such as less than 10 wt%, such as less than 5 wt %, such as between 0.1 to 5 wt%, such as 0.5 to 4 wt%, such as 1 to 3 wt%, such as 2 wt%, dry weight.

In a second specific embodiment of the method according to the present disclosure, the method comprises the steps (A1) - (A3) - (A2') - (A2") - (B1) - (C1) - (D1). The dispersion provided in step (A1) is an aqueous dispersion comprising fibrous cellulose, i.e. paper pulp; the dispersion provided in step (A2') is an aqueous dispersion comprising graphene oxide in an amount of 1 to 25 wt% of the dispersion; and the aqueous solution provided in step (A3) comprises a reducing agent in an amount of 1 to 15 wt% of the solution. The reducing agent may be chosen from the group consisting of C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid). In step (A2"), the reducing agent will reduce the graphene oxide into reduced graphene oxide. The skilled person realizes that not all of the graphene oxide will necessarily be reduced to reduced graphene oxide, but that a mixture of graphene oxide and reduced graphene oxide may be the result. The resulting cellulose-based sheet material is a paper or paperboard.

Optionally, the dispersion provided in step (A1) also comprises microfibrillated cellulose and/or nanocrystalline cellulose.

Specifically, the dispersion provided in step (A2') may comprise graphene oxide in an amount of 4 to 25 wt%, such as 5 to 25 wt%, such as 10 to 25 wt%, such as 10 to 20 wt%, of the dispersion.

Optionally, microfibrillated cellulose and/or nanocrystalline cellulose is also present in the dispersion provided in step (A2), which facilitates the dispersion of graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and the microfibrillated cellulose and/or nanocrystalline cellulose (i.e. [graphene oxide] : [microfibrillated cellulose and/or nanocrystalline cellulose]) in the dispersion provided in step (A2) is 1:4 to 4:1, such as 1:3 to 3:1; such as 1:2 to 2:1, such as 1:1.

Details of steps (C1) and (D1) are as described in the first specific embodiment above.

Optionally, the resulting paper or paperboard obtained during or after step (D1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting cellulose-based sheet material is a paper or paperboard.

The resulting paper or paperboard has a thickness of 10 to 500 µm, 25 to 500 µm, such as 50 to 450 µm, such as 100 to 400 µm, such as 150 to 350 µm, such as 200 to 300 µm such as 15 to 100 µm, such as from 20 to 50 µm, such as from 25 to 45 µm.

The total amount of graphene oxide (if still present) and reduced graphene oxide in the paper or paperboard obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of graphene oxide (if still present) and reduced graphene oxide in the paper or paperboard obtained by the method is 4 to 25 wt%, based on dry weight.

Preferably, if present, the total amount of microfibrillated cellulose and/or nanocrystalline cellulose in the resulting paper or paperboard is less than 15 wt%, such as less than 10 wt%, such as less than 5 wt %, such as between 0.1 to 5 wt%, such as 0.5 to 4 wt%, such as 1 to 3 wt%, such as 2 wt%.

In a third specific embodiment of the method according to the present disclosure, the method comprises the steps (A1) - (A2) - (A3) - (B1) - (C1) - (D1) - (F1). The dispersion provided in step (A1) is an aqueous dispersion comprising fibrous cellulose, i.e. paper pulp, and the dispersion provided in step (A2) is an aqueous dispersion comprising graphene oxide in an amount of 1 to 25 wt% of the dispersion; and the aqueous solution provided in step (A3) comprises a reducing agent in an amount of 1 to 15 wt% of the solution. The reducing agent may be chosen from the group consisting of C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid). In step (F1), the reducing agent will reduce the graphene oxide into reduced graphene oxide. The skilled person realizes that not all of the graphene oxide will necessarily be reduced to reduced graphene oxide, but that a mixture of graphene oxide and reduced graphene oxide may be the result. The resulting cellulose-based sheet material is a paper or paperboard.

Optionally, the dispersion provided in step (A1) also comprises microfibrillated cellulose and/or nanocrystalline cellulose. This may have the advantage that the gas barrier of the resulting cellulose-based sheet material is improved.

Specifically, the dispersion provided in step (A2) may comprise graphene oxide in an amount of 4 to 25 wt%, such as 5 to 25 wt%, such as 10 to 25 wt%, such as 10 to 20 wt%, of the dispersion. Optionally, microfibrillated cellulose and/or nanocrystalline cellulose is also present in the dispersion provided in step (A2), which facilitates the dispersion of graphene oxide and/or reduced graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and/or reduced graphene oxide and the microfibrillated cellulose and/or nanocrystalline cellulose (i.e. [graphene oxide and/or reduced graphene oxide] : [microfibrillated cellulose and/or nanocrystalline cellulose]) in the dispersion provided in step (A2) is 1:4 to 4:1, such as 1:3 to 3:1; such as 1:2 to 2:1, such as 1:1.

Details of steps (C1) and (D1) are as described in the first specific embodiment above.

Optionally, the resulting paper or paperboard obtained during or after step (D1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting cellulose-based sheet material is a paper or paperboard. The resulting paper or paperboard has a thickness of 10 to 500 µm, such as 25 to 500 µm, such as 50 to 450 µm, such as 100 to 400 µm, such as 150 to 350 µm, such as 200 to 300 µm.

The total amount of graphene oxide (if still present) and/or reduced graphene oxide in the paper or paperboard obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of graphene oxide (if still present) and reduced graphene oxide in the paper or paperboard obtained by the method is 4 to 25 wt%, based on dry weight.

Preferably, if present, the total amount of microfibrillated cellulose and/or nanocrystalline cellulose in the resulting paper or paperboard is less than 15 wt%, such as less than 10 wt%, such as less than 5 wt %, such as between 0.1 to 5 wt%, such as 0.5 to 4 wt%, such as 1 to 3 wt%, such as 2 wt%.

In a fourth specific embodiment of the method according to the present disclosure, the method comprises the steps (A1) - (A2) - (B1) - (C1) - (D1) - (E1). The dispersion provided in step (A1) is an aqueous dispersion comprising fibrous cellulose, i.e. paper pulp, and the dispersion provided in step (A2) comprises graphene oxide in an amount of 1 to 25 wt% of the dispersion. The resulting sheet material is a paper or paperboard.

Optionally, the dispersion provided in step (A1) also comprises microfibrillated cellulose and/or nanocrystalline cellulose.

Specifically, the dispersion provided in step (A2) may comprise graphene oxide in an amount of 4 to 25 wt%, such as 5 to 25 wt%, such as 10 to 25 wt%, such as 10 to 20 wt%, of the dispersion.

The liquid dispersion provided in step (A2) is an aqueous dispersion.

Optionally, microfibrillated cellulose and/or nanocrystalline cellulose is also present in the dispersion provided in step (A2). This results in a well dispersed and homogeneous dispersion. The weight ratio of graphene oxide and the microfibrillated cellulose and/or nanocrystalline cellulose (i.e. [graphene oxide] : [microfibrillated cellulose and/or nanocrystalline cellulose]) in the dispersion provided in step (A2) is 1:4 to 4:1, such as 1:3 to 3:1; such as 1:2 to 2:1, such as 1:1.

Preferably, Step (C1) is performed under reduced pressure or vacuum.

Step (D1) is performed by calendering. The temperature of the surfaces of heated calender rolls is 120 to 170°C, such as 120 to 160°C, such as 130 to 150°C, such as 140°C. A suitable roller nip line load in the calendering step may be above 200 kN/m, such as at least 300 kN/m, such as at least 450 kN/m, such as at least 600 kN/m.

The cellulose-based sheet material for a laminated packaging material obtained during or after either of steps (D1) and (E1), is further subjected to a heat reducing temperature of about 190°C, thus reducing the graphene oxide.

Thus, optionally, the resulting paper or paperboard obtained during or after step (D1) or (E1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting paper or paperboard has a thickness of 10 to 500 µm, such as 25 to 500 µm, such as 50 to 450 µm, such as 100 to 400 µm, such as 150 to 350 µm, such as 200 to 300 µm, such as 15 to 100 µm, such as from 20 to 50 µm, such as from 25 to 45 µm.

The total amount of graphene oxide (if still present) and/or reduced graphene oxide in the paper or paperboard obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of graphene oxide (if still present) and reduced graphene oxide in the paper or paperboard obtained by the method is 4 to 25 wt%, based on dry weight.

Preferably, if present, the total amount of microfibrillated cellulose and/or nanocrystalline cellulose in the resulting paper or paperboard is less than 15 wt%, such as less than 10 wt%, such as less than 5 wt %, such as between 0.1 to 5 wt%, such as 0.5 to 4 wt%, such as 1 to 3 wt%, such as 2 wt%, dry weight.

### Specific embodiments of the method resulting in a film of microfibrillated cellulose

In a fifth specific embodiment of the method according to the present disclosure, the method comprises the steps (A1) - (A2) - (B1) - (C1) - (D1). The dispersion provided in step (A1) is an aqueous dispersion comprising a majority of microfibrillated cellulose further in a mixture with a remaining amount of fibrous cellulose and the dispersion provided in step (A2) comprises graphene, graphene oxide and/or reduced graphene oxide in an amount of 1 to 25 wt% of the dispersion. The resulting sheet material is a film based on microfibrillated cellulose. Such a film based on microfibrillated cellulose thus has a content of microfibrillated cellulose of more than 50 wt%, based on dry weight of total cellulose content.

Optionally, the dispersion provided in step (A1) also comprises some nanocrystalline cellulose. The liquid dispersion provided in step (A2) may be an aqueous dispersion, especially when the carbon-based material is reduced graphene oxide.

Specifically, the dispersion provided in step (A2) may comprise graphene, graphene oxide and/or reduced graphene oxide in an amount of 4 to 25 wt%, such as 5 to 25 wt%, such as 10 to 25 wt%, such as 10 to 20 wt%, of the dispersion.

Preferably, the dispersion provided in step (A2) comprises graphene oxide and/or reduced graphene oxide. The carbon-based material comprised in the dispersion provided in step (A2) may be graphene oxide.

The liquid dispersion provided in step (A2) may be based on an organic solvent, especially when the carbon-based material is graphene.

Optionally, microfibrillated cellulose and/or nanocrystalline cellulose is also present in the liquid dispersion provided in step (A2), which facilitates the dispersion of graphene oxide and/or reduced graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and/or reduced graphene oxide and the microfibrillated cellulose and/or nanocrystalline cellulose (i.e. [graphene oxide and/or reduced graphene oxide] : [microfibrillated cellulose and/or nanocrystalline cellulose]) in the dispersion provided in step (A2) is1:4 to 4:1, such as 1:3 to 3:1; such as 1:2 to 2:1, such as 1:1.

Preferably, Step (C1) is performed under reduced pressure or vacuum.

Step (D1) is performed by calendering. The temperature of the surfaces of heated calender rolls is 120 to 170°C, such as 120 to 160°C, such as 130 to 150°C, such as 140°C. The roller nip line load of the calendering step is higher than 200 kN/m, such as at least 300 kN/m, such as at least 450 kN/m, such at least 600 kN/m.

Optionally, when the carbon-based material is graphene oxide, the resulting film based on microfibrillated cellulose obtained during or after step (D1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting film based on microfibrillated cellulose has a thickness of 10 to 200 µm, such as 15 to 100 µm, such as from 20 to 50 µm, such as from 25 to 45 µm.

The amount of graphene, graphene oxide and/or reduced graphene oxide in the film of microfibrillated cellulose obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the amount of graphene, graphene oxide and/or reduced graphene oxide in the film of microfibrillated cellulose obtained by the method is 4 to 25 wt%.

Preferably, if present, the total amount of nanocrystalline cellulose in the resulting film based on microfibrillated cellulose is less than 10 wt%, such as less than 5 wt %, such as between 0.1 to 5 wt%, such as 0.5 to 4 wt%, such as 1 to 3 wt%, such as 2 wt%.

In a sixth specific embodiment of the method according to the present disclosure, the method comprises the steps (A1) - (A3) - (A2') - (A2") - (B1) - (C1) - (D1). The dispersion provided in step (A1) is an aqueous dispersion comprising a majority of microfibrillated cellulose further in a mixture with a remaining amount of fibrous cellulose; the dispersion provided in step (A2') is an aqueous dispersion comprising graphene oxide in an amount of 1 to 25 wt% of the dispersion; and the aqueous solution provided in step (A3) comprises a reducing agent in an amount of 1 to 15 wt% of the solution. The reducing agent may be C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid). In step (A2"), the reducing agent will reduce the graphene oxide into reduced graphene oxide. The skilled person realizes that not all of the graphene oxide will necessarily be reduced to reduced graphene oxide, but that a mixture of graphene oxide and reduced graphene oxide may be the result. The resulting sheet material is a film based on microfibrillated cellulose.

Optionally, the dispersion provided in step (A1) also comprises nanocrystalline cellulose. Optionally, microfibrillated cellulose and/or nanocrystalline cellulose is also present in the dispersion provided in step (A2), which facilitates the dispersion of graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and the microfibrillated cellulose and/or nanocrystalline cellulose (i.e. [graphene oxide] : [microfibrillated cellulose and/or nanocrystalline cellulose]) in the dispersion provided in step (A2) is1:4 to 4:1, such as 1:3 to 3:1; such as 1:2 to 2:1, such as 1:1.

Specifically, the dispersion provided in step (A2') may comprise graphene oxide in an amount of 4 to 25 wt%, such as 5 to 25 wt%, such as 10 to 25 wt%, such as 10 to 20 wt%, of the dispersion.

Details of steps (C1) and (D1) are as described in the fifth specific embodiment above.

Optionally, the resulting film based on microfibrillated cellulose obtained during or after step (D1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting film based on microfibrillated cellulose has a thickness of 10 to 200 µm, such as 15 to 100 µm, such as from 20 to 50 µm, such as from 25 to 45 µm.

The total amount of graphene oxide (if still present) and reduced graphene oxide in the film based on microfibrillated cellulose obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of graphene oxide (if still present) and reduced graphene oxide in the film based on microfibrillated cellulose obtained by the method is 4 to 25 wt%.

Preferably, if present, the total amount of nanocrystalline cellulose in the resulting film of microfibrillated cellulose is less than 10 wt%, such as less than 5 wt %, such as between 0.1 to 5 wt%, such as 0.5 to 4 wt%, such as 1 to 3 wt%, such as 2 wt%.

In a seventh specific embodiment of the method according to the present disclosure, the method comprises the steps (A1) - (A2) - (A3) - (B1) - (C1) - (D1) - (F1). The dispersion provided in step (A1) is an aqueous dispersion comprising a majority of microfibrillated cellulose; and the dispersion provided in step (A2) is an aqueous dispersion comprising graphene oxide in an amount of 1 to 25 wt% of the dispersion; and the aqueous solution provided in step (A3) comprises a reducing agent in an amount of 1 to 15 wt% of the solution. The reducing agent may be chosen from the group consisting of C-vitamin (ascorbic acid), formic acid, oxalic acid, acetic acid, benzoic acid, lemon juice, vinegar, green tea and combinations thereof. In some embodiments, the reducing agent may be chosen from the group consisting of C-vitamin (ascorbic acid), formic acid, oxalic acid and combinations thereof. Preferably, the reducing agent is C-vitamin (ascorbic acid). In step (F1), the reducing agent will reduce the graphene oxide into reduced graphene oxide. The skilled person realizes that not all of the graphene oxide will necessarily be reduced to reduced graphene oxide, but that a mixture of graphene oxide and reduced graphene oxide may be the result. The resulting cellulose-based sheet material is a film based on microfibrillated cellulose.

Optionally, the dispersion provided in step (A1) also comprises nanocrystalline cellulose.

Specifically, the dispersion provided in step (A2) may comprise graphene oxide in an amount of 4 to 25 wt%, such as 5 to 25 wt%, such as 10 to 25 wt%, such as 10 to 20 wt%, of the dispersion.

Optionally, microfibrillated cellulose and/or nanocrystalline cellulose is also present in the dispersion provided in step (A2), which facilitates the dispersion of graphene oxide and/or reduced graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and/or reduced graphene oxide and the microfibrillated cellulose and/or nanocrystalline cellulose (i.e. [graphene oxide and/or reduced graphene oxide] : [microfibrillated cellulose and/or nanocrystalline cellulose]) in the dispersion provided in step (A2) is 1:4 to 4:1, such as 1:3 to 3:1; such as 1:2 to 2:1, such as 1:1.

Details of steps (C1) and (D1) are as described in the fifth specific embodiment above.

Optionally, the resulting film based on microfibrillated cellulose obtained during or after step (D1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting film of microfibrillated cellulose has a thickness of 10 to 200 µm, such as 15 to 100 µm, such as from 20 to 50 µm, such as from 25 to 45 µm.

The total amount of graphene oxide (if still present) and/or reduced graphene oxide in the film based on microfibrillated cellulose obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of graphene oxide (if still present) and/or reduced graphene oxide in the film based on microfibrillated cellulose obtained by the method is 4 to 25 wt%.

Preferably, if present, the total amount of nanocrystalline cellulose in the resulting paper or paperboard is less than 10 wt%, such as less than 5 wt %, such as between 0.1 to 5 wt%, such as 0.5 to 4 wt%, such as 1 to 3 wt%, such as 2 wt%.

In an eighth specific embodiment of the method according to the present disclosure, the method comprises the steps (A1) - (A2) - (B1)- (C1)- (D1)-(E1). The dispersion provided in step (A1) is an aqueous dispersion comprising a majority of microfibrillated cellulose further in a mixture with a remaining amount of fibrous cellulose, and the dispersion provided in step (A2) comprises graphene oxide in an amount of 1 to 25 wt% of the dispersion. The resulting sheet material is a film based on microfibrillated cellulose.

Optionally, the dispersion provided in step (A1) also comprises nanocrystalline cellulose. Optionally, microfibrillated cellulose and/or nanocrystalline cellulose is also present in the dispersion provided in step (A2), which facilitates the dispersion of graphene oxide in water. It is believed that microfibrillated cellulose and/or nanocrystalline cellulose encapsulate graphene oxide particles or flakes and, during reduction, prevent reduced graphene oxide from agglomerating. This results in a more well dispersed and homogeneous dispersion. The weight ratio of graphene oxide and the microfibrillated cellulose and/or nanocrystalline cellulose (i.e. [graphene oxide] : [microfibrillated cellulose and/or nanocrystalline cellulose]) in the dispersion provided in step (A2) is1:4 to 4:1, such as 1:3 to 3:1; such as 1:2 to 2:1, such as 1:1.

Specifically, the dispersion provided in step (A2) may comprise graphene oxide in an amount of 4 to 25 wt%, such as 5 to 25 wt%, such as 10 to 25 wt%, such as 10 to 20 wt%, of the dispersion.

The liquid dispersion provided in step (A2) is an aqueous dispersion.

Preferably, Step (C1) is performed under reduced pressure or vacuum.

Step (D1) is performed by calendering. The temperature of the surfaces of heated calender rolls is 120 to 170°C, such as 120 to 160°C, such as 130 to 150°C, such as 140°C. A suitable roller nip line load in the calendering step may be above 200 kN/m, such as at least 300 kN/m, such as at least 450 kN/m, such as at least 600 kN/m.

The resulting sheet material is a film based on microfibrillated cellulose obtained during or after either of steps (D1) and (E1), is further subjected to a heat reducing temperature of about 190°C, thus reducing the graphene oxide.

Thus, optionally, the resulting sheet material is a film based on microfibrillated cellulose obtained during or after step (D1) or (E1), may be subjected to a heat reducing temperature of at least 170°C, such as 170 to 200°C, such as 170 to 190°C, such as 170 to 180°C, particularly above 175°C, such as 175 to 200°C, such as 180 to 200°C, such as 185 to 195°C, such as about 190°C, in order to reduce the graphene oxide. The heat reducing temperature may preferably be 170-190°C, such as 175-190°C, such as 180-190°C. As an example, paper or paperboard may be heated to 190°C during 30-60 seconds.

The resulting film based on microfibrillated cellulose has a thickness of 10 to 200 µm, such as 15 to 100 µm, such as from 20 to 50 µm, such as from 25 to 45 µm.

The total amount of graphene oxide (if still present) and reduced graphene oxide in the film based on microfibrillated cellulose obtained by the method is 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of graphene oxide (if still present) and reduced graphene oxide in the film based on microfibrillated cellulose obtained by the method is 4 to 25 wt%.

Preferably, if present, the total amount of nanocrystalline cellulose in the resulting film of microfibrillated cellulose is less than 10 wt%, such as less than 5 wt %, such as between 0.1 to 5 wt%, such as 0.5 to 4 wt%, such as 1 to 3 wt%, such as 2 wt%.

### The obtained cellulose-based sheet material

Depending on the nature of the cellulosic material in the dispersion provided in step (A1), the obtained sheet material will be a paper, a paperboard or a film based on microfibrillated cellulose. Preferably, the obtained sheet material is a paper, or a paperboard.

The obtained sheet material may have a thickness of 10 to 500 µm, such as 25 to 500 µm, such as 50 to 450 µm, such as 100 to 400 µm, such as 150 to 350 µm, such as 200 to 300 µm, such as 15 to 100 µm, such as from 20 to 50 µm, such as from 25 to 45 µm.

In a specific embodiment of the obtained sheet material, the weight ratio of the at least one carbon-based material and the microfibrillated cellulose and/or nanocrystalline cellulose (i.e. [carbon-based material] : [microfibrillated cellulose and/or nanocrystalline cellulose]) in the material obtained in step (E1) is 1:4 to 4:1, such as 1:3 to 3:1; such as 1:2 to 2:1, such as 1:1.

Preferably, the carbon-based material is graphene, graphene oxide, and/or reduced graphene oxide.

The amount of the at least one carbon-based material in the cellulose-based sheet material for a laminated packaging material obtained by the method may be 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of the at least one carbon-based material in the cellulose-based sheet material is 4 to 25 wt%.

Specifically, improved mechanically properties may be achieved by amounts as low as 0.005 wt% of the carbon-based material. Thus, the amount of the at least one carbon-based material in the cellulose-based sheet material for a laminated packaging material obtained by the method disclosed herein may be 0.005 to 5 wt%, such as 0.01 to 4 wt%, such as 0.05 to 3 wt%, such as 0.1 to 2 wt%, such as 0.15 to 1 wt%, such as 0.2 to 0.75 wt%, such as 0.25 to 0.5 wt%.

Specifically, improved gas-barrier properties may be achieved by amounts from 0.1 wt% of the carbon-based material. Thus, the amount of the at least one carbon-based material in the cellulose-based sheet material for a laminated packaging material obtained by the method disclosed herein may be 0.1 to 25 wt%, preferably 1 to 20 wt%, more preferred 2 to 15 wt%, more preferred 3 to 12 wt%, even more preferred 5 to 10 wt%.

The microfibrillated cellulose may be present in the resulting paper or paperboard in a total amount of 0.1 to 95 wt%, such as 0.5 to 90 wt%, such as 1 to 85 wt%, such as 5 to 80 wt%, such as 10 to 75 wt%, such as 15 to 70 wt%, such as 20 to 65 wt%, such as 25 to 60 wt%, such as 30 to 55 wt%, such as 35 to 50 wt%, such as 40 to 45 wt%, such as 0.1 to 5 wt%, such as 0.25 to 4 wt%, such as 0.5 to 3 wt%, such as 1 to 2 wt%.

In certain cases the microfibrillated cellulose may be present in the paper or paperboard in a total amount of less than 10 wt%, such as less than 5 wt %, such as between 0.1 to 5 wt%, such as 0.5 to 4 wt%, such as 1 to 3 wt%, such as 2 wt%.

In specific cases, the microfibrillated cellulose may be present in the paper or paperboard in a total amount of 60 to 85 wt%, such as 65 to 85 wt%, such as 65 to 80 wt%, such as 65 to 75 wt%, such as 70 to 75 wt%.

The nanocrystalline cellulose may be present in the paper or paperboard in a total amount of less than 10 wt%, such as less than 5 wt %, such as between 0.1 to 5 wt%, such as 0.5 to 4 wt%, such as 1 to 3 wt%, such as 2 wt%.

When the paper or paperboard comprises both microfibrillated cellulose and/or nanocrystalline cellulose, the total amount of microfibrillated cellulose and/or nanocrystalline cellulose is less than 90 wt%, such as less than 80 wt%, such as less than 70 wt%, such as less than 60 wt%, such as less than 50 wt%, such as less than 40 wt%, such as less than 30 wt%, such as less than 20 wt%, such as less than 15 wt%, such as less than 10 wt%, such as less than 5 wt%. In certain cases, the total amount of microfibrillated cellulose and/or nanocrystalline cellulose in the obtained cellulose-based sheet material may be less than 15 wt%, such as less than 10 wt%, such as less than 5 wt %, such as between 0.1 to 5 wt%, such as 0.5 to 4 wt%, such as 1 to 3 wt%, such as 2 wt%.

### Laminated packaging material

The present disclosure also relates to a laminated packaging material 1 comprising a cellulose-based sheet material obtainable by the method according to the first aspect of the present disclosure. The laminated packaging material 1 may be used for a packaging container 2.

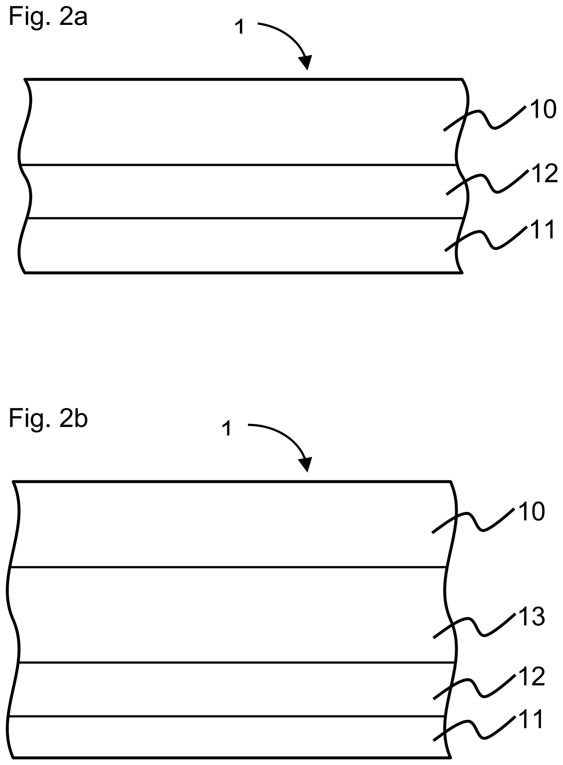

In its simplest form, shown in Fig. 2a, the laminated packaging material 1a comprises an outermost protective layer 10, an innermost layer 11, which is liquid-tight and heat-sealable, and a cellulose-based sheet material 12 comprising cellulosic material. The cellulose-based sheet material 12 is disposed between the outermost protective layer 10 and the innermost layer 11. A carbon-based material is distributed throughout the cellulose-based sheet material 12. The carbon-based material is at least one carbon-based material chosen from the group consisting of graphite, graphene, graphene oxide and reduced graphene oxide. Thus, the laminated packaging material comprises a cellulose-based sheet material obtainable by the method according to the present disclosure.

In a packaging container 2 made from a laminated packaging material according to the present disclosure, the innermost layer 11 faces the inside of the packaging container 2. When the packaging container 2 contains a food product, the innermost layer 11 is in contact with the food product.

Preferably, the carbon-based material is graphene, graphene oxide, and/or reduced graphene oxide.

The carbon-based material may be present in the cellulose-based sheet material in an amount of 0.005 to 25 wt%, such as 0.05 to 25 wt%, such as 0.1 to 25 wt%, preferably 4 to 25 wt%, more preferred 5 to 25 wt%, most preferred 6 to 25 wt%, such as 6 to 20 wt%, based on dry weight. Specifically, the total amount of the carbon-based material in the cellulose-based sheet material is 4 to 25 wt%.

Specifically, improved mechanically properties may be seen at amounts as low as 00.005 wt% of the carbon-based material. Thus, the amount of the at least one carbon-based material in the cellulose-based sheet material 12 may be 0.005 to 5 wt%, such as 0.01 to 4 wt%, such as 0.05 to 3 wt%, such as 0.1 to 2 wt%, such as 0.15 to 1 wt%, such as 0.2 to 0.75 wt%, such as 0.25 to 0.5 wt%.

Specifically, improved gas-barrier properties may be seen at amounts from 0.1 wt% of the carbon-based material. Thus, the amount of the at least one carbon-based material in the cellulose-based sheet material 12 may be 0.1 to 25 wt%, preferably 1 to 20 wt%, more preferred 2 to 15 wt%, more preferred 3 to 12 wt%, even more preferred 5 to 10 wt%.

Specifically, induction heat-sealability of the laminated packaging material may be enabled at amounts from 4 wt%, such as from 5 wt% of the carbon-based material. Thus, the amount of the at least one carbon-based material may be present in the cellulose-based sheet material in an amount of 4 to 25 wt%, such as 5 to 25 wt%, such as 6 to 25 wt%, such as 6 to 20 wt%, such as 6 to 15 wt%, such as 6 to 12 wt%, such as 6 to 10 wt%, based on dry weight.

Preferably, the cellulosic material is fibrous cellulose and, optionally, further comprising microfibrillated cellulose and/or nanocrystalline cellulose.

The cellulose-based sheet material 12 may thus be a paper, a paperboard or a film. Preferably, the cellulose-based sheet material is paper or paperboard, i.e. comprising fibrous cellulose.

In certain embodiments, the cellulose-based material 12 is a paper or paperboard comprising an amount of microfibrillated cellulose and/or nanocrystalline cellulose.

The microfibrillated cellulose may be present in the resulting paper or paperboard in a total amount of 0.1 to 95 wt%, such as 0.5 to 90 wt%, such as 1 to 85 wt%, such as 5 to 80 wt%, such as 10 to 75 wt%, such as 15 to 70 wt%, such as 20 to 65 wt%, such as 25 to 60 wt%, such as 30 to 55 wt%, such as 35 to 50 wt%, such as 40 to 45 wt%.

In certain cases the microfibrillated cellulose may be present in the paper or paperboard in a total amount of less than 10 wt%, such as less than 5 wt %, such as between 0.1 to 5 wt%, such as 0.5 to 4 wt%, such as 1 to 3 wt%, such as 2 wt%.

The nanocrystalline cellulose may be present in the paper or paperboard in a total amount of less than 10 wt%, such as less than 5 wt %, such as between 0.1 to 5 wt%, such as 0.5 to 4 wt%, such as 1 to 3 wt%, such as 2 wt%.

In certain specific embodiments, the cellulose-based sheet material 12 is a paper or paperboard mainly comprising of fibrous cellulose, and further comprising microfibrillated cellulose in an amount of less than 10 wt%, such as less than 5 wt %, such as between 0.1 to 5 wt%, such as 0.5 to 4 wt%, such as 1 to 3 wt%, such as 2 wt%. Such a cellulosed-based material 12 may further comprise nanocrystalline cellulose in a total amount of less than 10 wt%, such as less than 5 wt %, such as between 0.1 to 5 wt%, such as 0.5 to 4 wt%, such as 1 to 3 wt%, such as 2 wt%.

When the paper or paperboard comprises both microfibrillated cellulose and/or nanocrystalline cellulose, the total amount of microfibrillated cellulose and/or nanocrystalline cellulose is less than 90 wt%, such as less than 80 wt%, such as less than 70 wt%, such as less than 60 wt%, such as less than 50 wt%, such as less than 40 wt%, such as less than 30 wt%, such as less than 20 wt%, such as less than 15 wt%, such as less than 10 wt%, such as less than 5 wt%. In certain cases, the total amount of microfibrillated cellulose and/or nanocrystalline cellulose in the obtained cellulose-based sheet material may be less than 15 wt%, such as less than 10 wt%, such as less than 5 wt %, such as between 0.1 to 5 wt%, such as 0.5 to 4 wt%, such as 1 to 3 wt%, such as 2 wt%.

In specific cases, the microfibrillated cellulose may be present in the paper or paperboard in a total amount of 40 to 85 wt%, such as 40 to 80 wt%, such as 45 to 75 wt%, such as 50 to 75 wt%, such as 60 wt%, such as 60 to 85 wt%, such as 65 to 85 wt%, such as 65 to 80 wt%, such as 65 to 75 wt%, such as 70 to 75 wt%.

Thus, in some embodiments, the cellulose-based sheet material 12 is a film comprising mainly, such as up to 95 wt%, microfibrillated cellulose. As described above, such a cellulose-based sheet material 12 may further comprise fibrous cellulose and, optionally further comprise nanocrystalline cellulose.

The cellulose-based sheet material 12 may have a thickness of 10 to 500 µm, such as 25 to 500 µm, such as 50 to 450 µm, such as 100 to 400 µm, such as 150 to 350 µm, such as 200 to 300 µm, such as 15 to 100 µm, such as from 20 to 50 µm, such as from 25 to 45 µm.

Preferably, the outermost protective layer is liquid tight.

The outermost liquid-tight layer may be a thermoplastic polymer, such as polypropylene or polyethylene. The outermost liquid-tight layer 10 may be present in a total amount from 5 to 25 g/m², such as 8 to 20 g/m², such as 10 to 15 g/m². Preferably, the outermost liquid-tight layer 10 is polyethylene and present in a total amount from 5 to 15 g/m², such as 5 to 10 g/m². Preferably, the outermost liquid-tight layer is applied onto and adjacent the cellulose-based sheet material 12, by extrusion coating of a molten curtain of the thermoplastic polymer, which solidifies when applied onto a forwarded web substrate by cooling in a lamination nip between a lamination press roller and a chill roller.

The outermost liquid-tight layer 10 may alternatively be bonded to the cellulose-based sheet material 12 by an interjacent polymer bonding or tie layer (not shown). The bonding or tie layer may e.g. be poly (methacrylic acid), ethylene (meth)acrylic acid copolymers (E(M)AA), ethylene-vinyl alcohol (EVOH), polyvinyl alcohol (PVOH). In the case of, the tie layer being a thermoplastic polymer, such as EAA or EMAA, it is coextrusion coated together with the outermost layer and applied to the cellulose-based sheet material 12 in the same operation. Such a bonding or tie layer facilitates the adhesion of the outer liquid-tight layer 10 to the cellulose-based sheet material 12, such that the adhesion of the outer liquid-tight layer 10 to the cellulose-based sheet material 12 is enhanced or adequately adjusted. In the case when the outermost, protective layer 10 is a premanufactured polymer or material film or sheet, the bonding or tie layer is instead a water-dispersible or water-soluble adhesive comprising a polymer binder, as listed above, i.e. EVOH, EAA, PVOH or EVAc or starch. The aqueous adhesive comprising the bonding or tie polymer is applied as an aqueous dispersion onto the pre-manufactured film or sheet of the outermost protective layer 10, and subsequently pressure-laminated to the cellulose-based sheet material 12, preferably in a continuous lamination roller nip. Such wet lamination adhesive lamination results in a bonding layer, which is present in an amount of between 3 and 5 g/m², preferably between 3 and 4 g/m², most preferred 3.5 g/m², in the laminated material.

Preferably, the innermost layer 11 is a material having thermoplastic properties. The innermost layer may thus be a layer of a thermoplastic polymer, such as a polyolefin, such as polyethylene or polypropylene, preferably low density polyethylene (LDPE), linear low density polyethylene (LLDPE) and/or metallocene low density polyethylene (mLLDPE). Accordingly, also the innermost layer 11 is preferably liquid tight.

Preferably, the innermost liquid-tight layer 11 is applied on the inner, opposite side of the cellulose-based sheet material 12, by melt extrusion coating, in the same way as the outermost protective or liquid-tight layer 10.

The innermost layer 11 may be bonded to the cellulose-based sheet material 12 by an interjacent polymer bonding or tie layer (not shown). The bonding or tie layer may e.g. comprise poly (methacrylic acid), ethylene acrylic acid copolymers (EAA), ethylene-vinyl alcohol (EVOH), polyvinyl alcohol (PVOH), starch or starch derivatives or modified starch.

In the case of, the tie layer being a thermoplastic polymer, such as EAA or EMAA, it is coextrusion coated together with the polymers of the innermost layer 11 and applied to the inner, opposite side of the cellulose-based sheet material 12 in the same operation.

In the case when the innermost, protective layer 11 is a premanufactured polymer or material film or sheet, the bonding or tie layer is instead a water-dispersible or water-soluble adhesive comprising a polymer binder, as listed above, i.e. EVOH, EAA, PVOH or EVAc or starch. The aqueous adhesive comprising the bonding or tie polymer is applied as an aqueous dispersion onto the pre-manufactured film or sheet of the innermost protective layer 11, and subsequently pressure-laminated to the cellulose-based sheet material 12, preferably in a continuous lamination roller nip. Such wet lamination adhesive lamination results in a bonding layer, which is present in an amount of between 3 and 5 g/m², preferably between 3 and 4 g/m², most preferred 3.5 g/m², in the laminated material.

A further embodiment of the laminated packaging material 1b is shown in Fig. 2b. The laminated packaging material 1b shown in Fig. 2b comprises an outermost protective layer 10, an innermost layer 11, which is liquid-tight and heat-sealable, and a cellulose-based sheet material 12 comprising cellulosic material and being disposed between the outermost protective layer 10 and the innermost layer 11. The laminated packaging material 1b further comprises a core layer 13 comprising cellulosic material being disposed between the outermost protective layer 10 and the cellulose-based sheet material 12.

The core layer 13 and the outermost protective layer 10 may be laminated to each other, such that they are directly contacting each other. Alternatively, they may be laminated to each other by an interjacent bonding layer.

The nature of the outermost protective layer 10 is as described above.

The nature of the innermost layer 11 is as described above.

The nature of the cellulose-based sheet material 12 is as described above.

The core layer 13 may be a bulk layer of paper or paperboard or other cellulose-based material. The "bulk layer" has a relatively low density and creates a relatively thick "distancing" layer in the laminated sandwich of the multilayer laminated packaging material. When laminated to layers of higher density and Young's Modulus, the sandwich effect creates a laminated material having an increased bending stiffness, in comparison to a laminate without such a bulk layer.

The core layer may have a coating on the side facing the cellulose-based sheet material 12, i.e. on its inner side. The coating may comprise a material having gas barrier properties, such as comprising a water-soluble or water-dispersible polymer providing gas barrier properties, such as starch, chitosan, ethylene-vinyl alcohol (EVOH), polyvinyl alcohol (PVOH), microfibrillated cellulose or nanocrystalline cellulose or any combination of such polymers. The core layer may have a smoothening pre-coating beneath such a barrier coating, in order to optimize its gas barrier performance.

The core layer 13 may be printed with an ink décor pattern on a side facing the outermost protective layer 10. The core layer 13 may be coated with a printable coating, such as a clay-coat, as a receiving surface for the ink décor pattern to be printed onto the core layer and to be facing the outermost protective layer 10. The outermost protective layer is thus also transparent to enable visibility to an end consumer of the printed décor pattern on the outside of packaging containers made of the laminated packaging material.

The cellulose-based sheet material 12 may be bonded to the core layer 13 by an interjacent bonding layer of a polymer (not shown). The bonding layer may be one single polymer layer or comprise several different polymer layers. The bonding layer may be applied by means of an aqueous wet dispersion or solution and subsequent pressure lamination of the two paper or cellulose-based layers or by means of melt extrusion lamination by means of a molten, solidifying thermoplastic polymer, such as a polyolefin, such as polyethylene.

The innermost layer 11 may be bonded to the cellulose-based sheet material 12 by an interjacent polymer or bonding tie layer (not shown). Such interjacent polymer or bonding tie layer may comprise an adhesive polymer such as an ethylene (meth)acrylic acid copolymer or a maleic anhydride grafted polyolefin.

### Heat sealing of packages

The present disclosure also relates to heat sealing (i.e. heat welding), such as induction heat sealing, of packages. In such applications, the carbon-based material is present in the cellulose-based sheet material in an amount of 4 to 25 wt%, such as 5 to 25 wt%, such as 6 to 25 wt%, such as 6 to 20 wt%, such as 6 to 15 wt%, such as 6 to 12 wt%, such as 6 to 10 wt%, based on dry weight.

According to an embodiment for use by induction heat sealing, an alternating magnetic field is applied to a portion of the package where the heat seal is to be formed. An electric current is generated in the layer comprising the cellulosic material and the carbon-based material, in turn heating the layers adjacent to it. The carbon-based material comprises graphene or reduced graphene oxide. The generated heat in the adjacent innermost liquid-tight, thermoplastic layer melts the thermoplastic material such that molecular mobility increases and causes molecular dis- and re-entganglement and thus molecular interbonding between the two surfaces that are pressed together to cause a heat welded bond, i.e. a heat seal. The innermost liquid-tight layer comprises thus a material having thermoplastic properties, which will melt when heated and adhere to the adjacent material to form a seal.

Preferably, the magnetic field has a frequency in the MHz range, such as up to about 27 MHz. Within the higher MHz range, specific frequency bands are allocated by national authorities, such as 13.65 MHz and 27.12 MHz. At lower ranges, the frequency of operations may be more freely selected. Preferably, the electromagnetic device is operating at a frequency from 0.5 MHz to about 27 MHz, such as from 1 MHz to about 27 MHz such as from 13 MHz to about 27 MHz.

Preferably, the magnetic field is applied for a short time period in the millisecond range, such as 50 to 1000 ms, such as 100 to 1000 ms, such as 200 to 1000 ms, such as 300 to 1000 ms, such as 400 to 1000 ms, such as 500 to 1000 ms.

Alternatively, heat sealing may be carried out by ultrasonic heat sealing, whereby the materials of the laminated material are heated up by highfrequency vibrations in the ultrasonic range.

The package may be formed such that, in the portion where the heat sealing is to be created, the innermost liquid-tight layer faces the outermost protective layer.

Alternatively, the package may be formed such that, in the portion where the heat sealing is to be created, the innermost liquid-tight layer faces another part of the innermost layer.

The package may be formed by combining heat seals formed in the two alternative ways above.

For heat sealing of e.g. corner flaps on the outside of the package, heat seals may further be created such that, in the portion where the heat sealing is to be created, the outermost liquid-tight layer faces the outermost protective layer.

When the outermost, protective layer takes part in forming heat seals, the outermost layer is also of thermoplastic nature such that it is heat sealable to itself or to the innermost liquid-tight layer.

### Packaging container for food products

Packaging containers for sensitive liquid food, for example milk or juice, can also be produced from sheet-like blanks or prefabricated blanks of the laminated packaging material. From a tubular blank of the packaging laminate that is folded flat, packages are produced by raising the blank to form an open tubular container capsule, of which one open end is closed off by means of folding and heat-sealing of integral end panels. The thus closed container capsule is filled with the food product in question, e.g. juice, through its open end, which is thereafter closed off by means of further folding and heat-sealing of corresponding integral end panels. An example of a packaging container produced from sheet-like and tubular blanks is the conventional so-called gable-top package. There are also packages of this type which have a moulded top and/or screw cap made of plastic.
The present disclosure also relates to a packaging container 2 for food products comprising the laminated packaging material 1 as described herein.

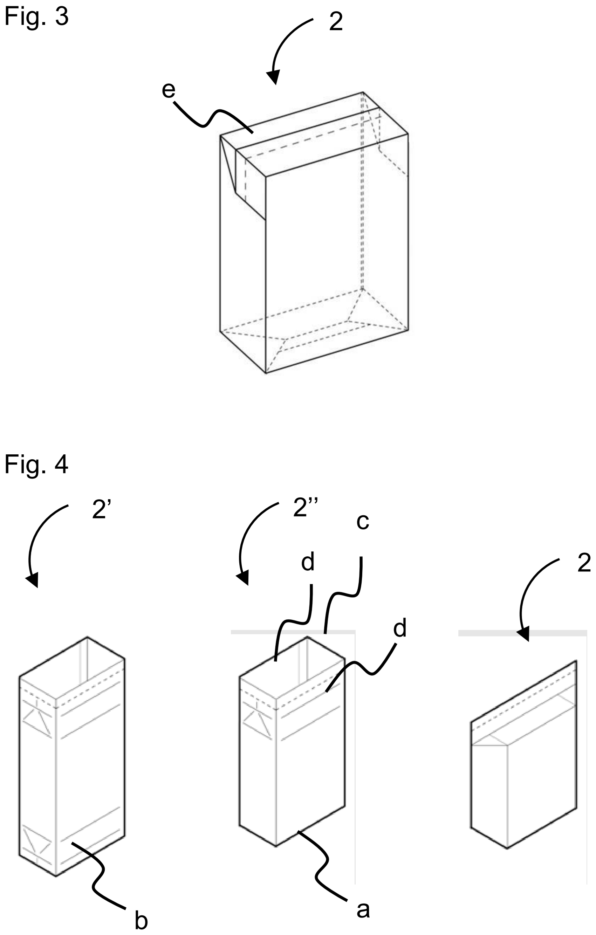

An example of such a packaging container is shown in Fig. 3. Such a packaging container 2 may be produced (schematically shown in Fig. 4) from prefabricated sleeves (2') from tube-folded and side-sealed blanks of the laminated packaging material 1 described herein with the aid of filling machines which form, fill and heat seal heat sterilizable packaging containers 2, i.e. containing the filled food product. In short, the packaging blank is first raised to an open, tubular packaging carton sleeve (2') having a rectangular cross section. The carton sleeve (2') is sealed at its one end by fold-forming and heat sealing of the foldable end panels (b) of the packaging sleeve (2'), for the formation of a substantially planar first end closure (a). The open packaging container (2") thus provided, is filled with the relevant contents, e.g. a food product, through its open end (c), which is thereafter closed by further fold-forming and heat sealing of the opposing end panels (d) of the open packaging container (2") for the formation of a substantially planar second end closure (e). The filled and sealed, normally parallelepipedal, packaging container 2 is thereafter ready for heat treatment in order to sterilize the packed food together with the closed packaging container 2.

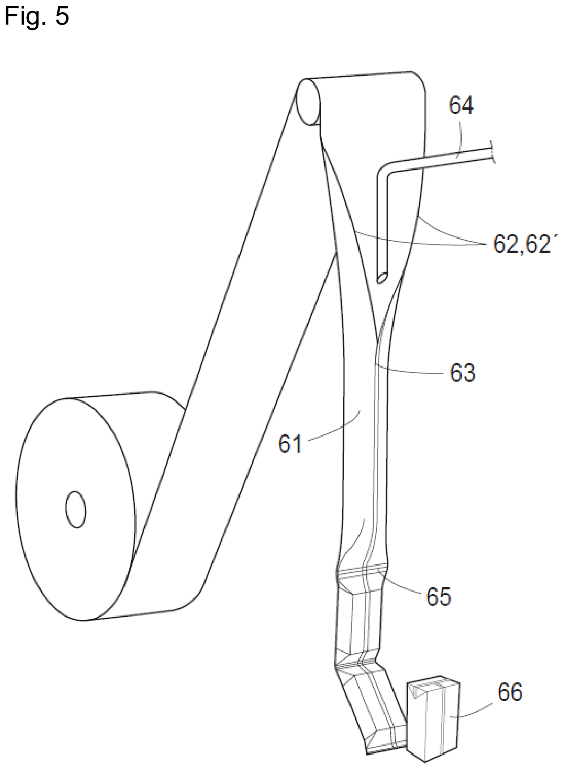

Fig. 5 shows the principle as described in the introduction of the present application, i.e. a web of laminated packaging material is formed into a tube 61 by overlapping the longitudinal edges 62, 62' of the web and heat sealing them to one another, to thus form an overlap joint 63. The tube is continuously filled 64 with the liquid food product to be filled and is divided into individual, filled packages by repeated, double transversal seals 65 of the tube at a predetermined distance from one another below the level of the filled contents in the tube. The packages 66 are separated by cutting between the double transversal seals (top seal and bottom seal) and are finally shaped into the desired geometric configuration by fold formation along prepared crease lines in the material.

### Use of the laminated packaging material

The present disclosure also relates to a use of the laminated packaging material 1 according to the present disclosure in a method of forming a packaging container. The method may further comprise the steps of filling and heat sealing packaging containers 2 for food products in a filling machine. The process may be as described above. Especially, the step of heat sealing the packaging container may be performed as described above.

### Experiments

Cellulose-based sheet materials according to the present disclosure were prepared and tested.

### Preparation of cellulose-based sheet materials

Cellulose was obtained by soaking a piece of paper in warm distilled water and thereafter mixing the dispersion. The dispersion was dewatered by hand pressing to obtain a mixture comprising 20 wt% cellulose.

An aqueous dispersion comprising 2 wt% graphene oxide was prepared. The graphene oxide was from "LayerOne", Norway, and a grade called "LayerOne 1.3A", which had 3 to 5 flakes of graphene oxide per stack.

Mixtures comprising 0.4 wt% cellulose and different amounts of graphene oxide were prepared by mixing 10 g of the dewatered cellulose (corresponding to 2 g of cellulose), 500 ml distilled water and a) 2, b) 4, or c) 6 g of the graphene oxide dispersion and subjecting the resulting mixture to vigorously mixing. The three resulting mixtures contained 0.4 wt% cellulose and a) 0.0078, b) 0.016 and c) 0.023 wt% graphene oxide, respectively.

The mixtures were transferred to moulds, dewatered, and thereafter placed between two filter papers and heated and dried from both sides for 5 minutes at about 180°C. During the heating, the obtained sheets went from being brown to being from dark grey to black, indicating that the graphene oxide had been reduced during the heating step. This is a known and reliable indication of a reduction of the graphene oxide having taken place. This was unexpected, since reduction of graphene oxide usually requires much higher temperatures than 180°C.

Thus, three different cellulose-based sheet materials were obtained, comprising about a) 2, b) 4 (3.8) and c) 6 (5.7) wt% reduced graphene oxide. The thickness of the sample sheets was about 200 µm.

### Calendering of cellulose-based sheets and the effect on electrical resistance

Cellulose-based sheets prepared as above were subjected to calendering at a temperature of 110°C. Electrical resistance was measured after calendering. The results presented are from single test samples, unless stated otherwise.

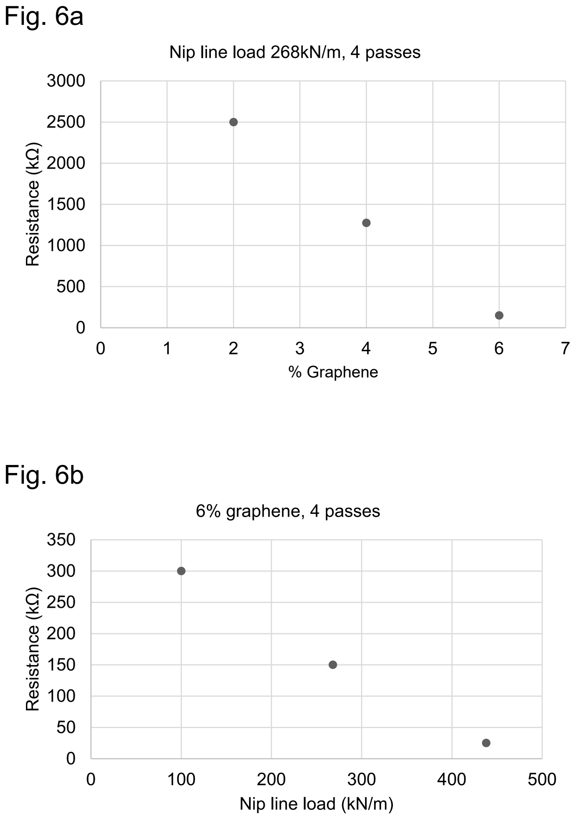

In Fig. 6a, the electrical resistance after calendering (268 kN/m and 4 passes) at 110°C is shown for cellulose-based sheets comprising different amounts of graphene. The value for 4 wt% graphene is an average of two samples. As shown in Fig. 6a, the electrical resistance of a cellulose-based sheet decreases with increasing amounts of graphene. The decrease is especially noticeable between 2 and 4 wt%.

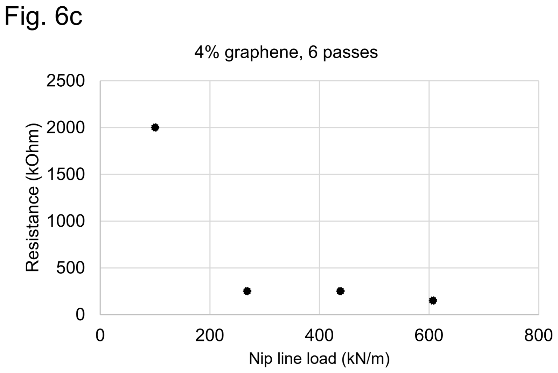

In Fig. 6b, the electrical resistance after calendering at different nip line loads (4 passes) at 110°C is shown for cellulose-based sheets comprising about 6 wt% graphene. As shown in Fig. 6b, the electrical resistance of a cellulose-based sheet decreases with increasing nip line load. In Fig. 6c, similar results are shown for cellulose-based sheets comprising about 4 wt% graphene (6 passes).

A tendency of the electrical resistance to decrease with increasing number of passes was also noted (data not shown).

To conclude, the electrical resistance may be decreased by increasing the amount of graphene in the cellulose-based sheet, by increasing the nip line load during calendering, by increasing the number of passes between the calendering rolls or by a combination of these factors.

A low electrical resistance is advantageous, since such a material may enable the heat sealing of a package material, comprising the cellulose-based sheet material, by induction heating.

As in the above example, a cellulose-based sheet material comprising 5.7 wt% graphene oxide was instead dried in the same way while subjected to a temperature of about 190°C during 1 minute.

Electrical resistance was measured and was as low as 3 to 4 kOhm in some areas of the cellulose-based sheet material. This indicates that potentially, with improved dispersion and paper homogeneity, as well as heat reducing conditions, there is further potential for improvement. It is also expected that a further decrease of the electrical resistance is likely to occur by applying high pressure to the cellulose-based sheet material, such as in a calendering treatment.

### Reduction of graphene oxide by vitamin C

The cellulose-based sheet material comprising 5.7 wt% graphene oxide (material c)) was placed between two filter papers and soaked for 2 hours with a saturated solution of vitamin C and thereafter dried by heating from both sides.

Electrical resistance was measured before reduction (>400 kOhm) and after reduction (50 to 60 kOhm). This indicates that a substantial reduction has taken place. Further decrease of the electrical resistance will occur by applying high pressure, such as in a calendering treatment, in order to compact the material of the cellulose-based sheet and to possibly also allow some further heat reduction.

## Claims

1. A method for producing a material for a laminated packaging material, the method comprising the steps of:
(A1) providing a liquid dispersion comprising cellulosic material;
(A2) providing a liquid dispersion comprising at least one carbon-based material chosen from the group consisting of graphite, graphene, graphene oxide and reduced graphene oxide;
(B1) mixing the liquid dispersion provided in step A1 with the liquid dispersion provided in step A2 to obtain a mixture;
(C1) subjecting the mixture obtained from step (B1) to draining of liquid through a porous substrate, followed by initial compression to obtain a compressed sheet of cellulosic material;
(D1) subjecting the compressed sheet of cellulosic material obtained in step (C1) to pressing to obtain a pressed sheet of cellulosic material;
and, optionally, a step of:
(E1) heating the sheet of cellulosic material before, during and/or after step (D1),
to obtain a cellulose-based sheet material for a laminated packaging material.

2. The method according to claim 1, wherein the pressing in step (D1) comprises calendering the compressed sheet of cellulosic material obtained in step (C1) to obtain the cellulose-based sheet material for a laminated packaging material.

3. The method according to claim 2, wherein calendering is performed by a calender roll arrangement having multiple rolls, of which at least one roll is heated and of which at least one roll has a nip line load above 200 kN/m, such as at least 300 kN/m, such as at least 400 kN/m, such as at least 600 kN/m.

4. The method according to any of the preceding claims, wherein the cellulosic material in the dispersion provided in step (A1) is fibrous cellulose; and, optionally, further comprises microfibrillated cellulose and/or nanocrystalline cellulose.

5. The method according to any of the preceding claims, wherein the liquid dispersion provided in step (A1) is paper pulp.

6. The method according to any one of the preceding claims, wherein the liquid dispersion provided in step (A2) comprises 1 to 25 wt% of the at least one carbon-based material.

7. The method according to any one of the preceding claims, wherein the amount of the at least one carbon-based material in the cellulose-based sheet material for a laminated packaging material obtained by the method is 0.005 to 25 wt%, such as 0.05 to 25 wt%, such as 0.1 to 25 wt%, preferably 4 to 25 wt%, more preferred 5 to 25 wt%, more preferred 6 to 25 wt%, most preferred 6 to 20 wt%, based on dry weight.

8. The method according to any one of the preceding claims, wherein the at least one carbon-based material in the liquid dispersion provided in step (A2) is graphene oxide and/or reduced graphene oxide,

9. The method according to any one of the preceding claims, wherein, when the liquid dispersion provided in step (A2) comprises graphene oxide, the method further comprises the step of
(A3) providing an aqueous solution comprising a reducing agent; and
wherein the liquid dispersion provided in step (A2) is obtained by the steps of
(A2') providing a liquid dispersion comprising graphene oxide; and
(A2") mixing the liquid dispersion provided in step (A2') with the aqueous solution provided in step (A3) and allowing the graphene oxide to undergo reduction.

10. The method according to any one of the preceding claims, wherein, when the liquid dispersion provided in step (A2) comprises graphene oxide, the sheet of the cellulosic material or the cellulose-based sheet material, respectively, obtained during or after either of steps (D1) or (E1), is subjected to a heat reducing temperature of at least 170°C, such as 170 to 200°C, such as 170 to 190°C, such as 170 to 180°C, particularly above 175°C, such as 175 to 200°C, such as 180 to 200°C, or 180-190°C, such as 185 to 195°C, such as about 190°C, in order to reduce the graphene oxide.

11. A laminated packaging material (1) comprising
- an outermost protective layer 10;
- an innermost layer 11, wherein the innermost layer is liquid tight and heat-sealable;
- a cellulose-based sheet material 12 comprising cellulosic material, wherein the cellulose-based sheet material 12 is disposed between the outermost protective layer 10 and the innermost layer 11;
wherein a carbon-based material is distributed throughout the cellulose-based sheet material 12; and
wherein the carbon-based material is at least one carbon-based material chosen from the group consisting of graphite, graphene, graphene oxide and reduced graphene oxide.

12. A laminated packaging material according to claim 11, further comprising a core layer 13 comprising cellulosic material, wherein the core layer 13 is disposed between the outermost protective layer 10 and the cellulose-based sheet material 12, preferably wherein the core layer 13 and the outermost protective layer 10 are laminated to each other.

13. A laminated packaging material according to claim 11 or 12, wherein the carbon-based material is present in the cellulose-based sheet material in an amount of 0.005 to 25 wt%, such as 0.05 to 25 wt%, such as 0.1 to 25 wt%, preferably 4 to 25 wt%, more preferred 5 to 25 wt%, more preferred 6 to 25 wt%, most preferred 6 to 20 wt%, based on dry weight.

14. A laminated packaging material according to any one of claims 11 to 13, wherein the carbon-based material is graphene and/or reduced graphene oxide.

15. A laminated packaging material according to any one of claims 11 to 14, wherein the cellulosic material is fibrous cellulose and, optionally, further comprises microfibrillated cellulose and/or nanocrystalline cellulose.

16. A laminated packaging material according to any one of claims 11 to 15, wherein the cellulose-based sheet material is paper or paperboard.

17. A laminated packaging material according to any one of claims 11 to 16, wherein the cellulose-based sheet material is produced by the method according to any one of claims 1 to 10.

18. Method for manufacturing of packages formed from the laminated packaging material according to any one of claims 11 to 17 by induction heat sealing.

19. A packaging container for food products, the packaging container comprising the laminated packaging material according to any one of claims 11 to 17.

20. Use of the laminated packaging material according to any one of claims 11 to 17 for forming a packaging container.
